# EUROPEAN PATENT SPECIFICATION

(11) **EP 0 738 210 B1**
(45) Date of publication and mention of the grant of the patent: **12.02.2003**
(21) Application number: 93925123.7
(22) Date of filing: 29.10.1993
(51) Int. Cl.: B32B 9/00, G11B 5/66, H01L 41/18, G11C 11/15

(54) **MEMORY MATERIAL AND METHOD FOR ITS MANUFACTURE**
SPEICHERMATERIAL UND VERFAHREN ZU SEINER HERSTELLUNG
MATERIAU POUR MEMOIRE ET PROCEDE DE FABRICATION

(43) Date of publication of application: 23.10.1996
(73) Proprietor: Kappa Numerics, Inc., New York, NY 10112 (US)
(72) Inventor: GENDLIN, Shimon, New York, NY 10028 (US)
(74) Representative: Hirsch, Marc-Roger
(86) International application number: US9310403
(87) International publication number: WO95011799

(56) References cited:
- US-A- 4 434 429
- US-A- 4 637 976
- US-A- 4 642 270
- US-A- 4 769 311
- US-A- 4 916 048
- US-A- 4 935 336
- US-A- 4 954 379
- US-A- 5 106 714

## Description

### BACKGROUND OF THE INVENTION

Computer technology requires memories having large storage capacity and high speed. Typically, in a modern computer, a semiconductor memory is employed as high-speed primary memory and magnetic disks are used for a large volume secondary memory.

Prior to the development of semiconductor memories, high-speed primary memory was implemented using a magnetic core memory. A magnetic core memory comprises a matrix of ring-shaped ferromagnetic cores. Each memory cell of the magnetic core memory includes a ferromagnetic core having two or more wires passing through the center of the core and a sensing coil installed around the core.

When a current I is applied to a wire that passes through the core, a magnetic field, having a magnetic field strength H which is a function of the current I is generated. The magnetic field produced by the current I causes a permanent magnetization of the core. The magnetization is measured by the magnetic induction B. The relationship between the magnetic induction B and the field strength H (i.e. a plot of B versus H) is known as a magnetization curve or BH loop. In the core memory, the magnetization curve is substantially square.

The magnetic induction B in the core has two states, Bᵣ and -Bᵣ, that correspond to the opposite directions of the magnetic field. Accordingly, each core can store a bit of binary data by associating one state with a "1" and the other state with a "0", for example, +Bᵣ may be associated with a binary "1" and -Bᵣ with a binary "0".

The binary data is written into a core memory cell by applying appropriate currents to the wires. If the total current passing through the core is greater than a critical current I_{c}, the magnetic induction of the core changes from -Bᵣ to +Bᵣ. Similarly, if the current is less than -I_{c}, the magnetic induction switches from +Bᵣ to -Bᵣ. In an array of magnetic cores, switching is performed when polarities of currents on two or more wires coincide. Thus, if the magnetic induction of a given core is initially -Bᵣ which corresponds to a binary "0", to change the induction to +Bᵣ, i.e. to store a binary "1", a current I>I_{c}/2 is applied to each of the two wires; so that the total current passing through the core is greater than +I_{c}.

The data stored in the core is retrieved by sensing the voltage across the coil induced by switching between the two magnetic states described above. The polarity of the induced voltage indicates the magnetic state of the core prior to switching.

Although the magnetic core memory described above is random accessible and non-volatile, such memory is large, consumes a large amount of power, operates at a slow speed and can not be manufactured to have a high storage density. To overcome these problems, magnetic thin film memory devices have been developed. A magnetic thin film memory consists of a strip of ferromagnetic thin film, two or more wires formed on the film for storing data and a coil around the film for retrieving data.

In the thin film memory, the magnetic moment M of the film represents the stored information. The magnetic moment M is oriented primarily in the plane of the film, and has two discrete orientations or states, namely M and -M, that represent binary "1" and "0". To store a bit of binary data, currents are applied to the wires formed on the thin film. These currents induce a magnetic field that is sufficient for changing the direction of the magnetic moment M. The stored information is retrieved by applying currents to the wires and measuring the induced voltage in the coil. As in magnetic core memory, the currents are typically selected such that a single current has insufficient amplitude to reverse the magnetic moment of the film so that at least two coincident currents are required for storing data.

There are significant drawbacks associated with magnetic thin film memory technology. First, thin film devices have an open magnetic flux structure and therefore the BH loop is smeared by a self-demagnetizing effect. To reduce this effect, the film is typically fabricated as a rectangle which length is much greater than its width. Since the induced voltage in the coil around the film is proportional to the cross-sectional area of the film, reducing the width of the film also reduces the induced voltage. As a result, the readout signal is easily affected by noise.

Second, in the existing magnetic films, the magnetic moment has a preferred in-plane direction. Thus the device is complicated by the necessity of applying currents of different amplitude for storing and retrieving data in the selected orientations. In addition, the thin film devices are not sufficiently small to achieve high storage densities.

In comparison to magnetic core and thin film memories, semiconductor memory is faster, consumes less power, and can have higher storage densities. Typical semiconductor memories include Dynamic Random Access Memory (DRAM), Static Random Access Memory (SRAM), and Read Only Memory (ROM).

DRAM offers relatively high speed, high storage density, low power consumption, and is readable and writable. However, both DRAM and SRAM are volatile, that is, they lose the stored information when the power is turned off. In addition, DRAM requires a constant refresh of the stored data which necessitates complex circuitry. While SRAM does not require a refresh, it has a higher power consumption and lower storage density than DRAM.

ROM is non-volatile but the information stored in a ROM cannot be updated, *i.e.*, data cannot be easily written into a ROM.

In a typical disk storage system, ferromagnetic material having a substantially square BH loop is coated on a disk. A magnetic head read is provided for reading and writing information on the disk as the disk rotates past the head. The disk is divided into circular tracks. Each track is further divided into small regions in which a magnetic moment has two states that represent binary values. An external magnetic field introduced by the read/write head changes the magnetic moment of each small region so as to store a binary value in the region. Thus, to write data, the magnetic head magnetizes an adjacent small region of the rotating disk material. The stored data is retrieved in the form of a voltage induced in the head by the magnetic moment of the small region as it moves past the head.

Magnetic disk storage systems can store high volumes of data, *e.g.*, 500 Megabytes or more. The magnetic disk storage systems, however, are not random accessible, operate at slow speed due to the requirement of mechanical movement, and require complex mechanical and electronic assemblies.

As will be apparent, none of the above-described memory technologies provides all the features that are desirable in a memory storage system. Thus, there is a present need to develop a non-volatile, high speed, high capacity, random accessible, static, and updatable storage system.

The parent application US-P-5 390 142, entitled "Memory Material and Method of Its Manufacture", discloses a new composition of materials and a non-volatile, high speed, high capacity, and random accessible memory built on the basis of this composition of materials.

Specifically, in the preferred embodiment, the composition of materials disclosed in the parent application comprises sequentially formed layers of Pb_{0.80}Cd_{0.10}Si_{0.10}, Se_{0.90}S_{0.10} and Fe_{0.76}Cr_{0.24}. In addition, these layers contain one or more of the following elements: Bi, Ag, O, and N. This composition of materials displays ferromagnetic, piezoelectric and electro-optical properties.

The memory disclosed in the parent application comprises two sets of parallel address lines disposed orthogonally on the opposite sides of a planar silicon substrate. The layers of the composition of materials, described above, are disposed on both sides of the substrate above the address lines such that the FeCr layers are the outermost, and each FeCr layer is connected to an electrode. In this device, each memory cell is defined by each crossing point of the address lines on the opposite sides of the substrate. Typically, in this memory device, each address line is approximately 2µm wide and 1µm thick, and the spacing between the adjacent lines is approximately 9µm. Thus, each memory cell occupies an approximately 11 µm square. Each cell of this memory is capable of storing two independent bits of information. Accordingly, the storage density of the memory device disclosed in the parent patent is typically about 1.65 mega bits per square centimeter.

An object of this invention is to realize a new composition of materials for building a memory with a storage density higher than provided by the memory disclosed in parent patent.

### SUMMARY OF THE INVENTION

According to the present invention, a new substrate, a new composition of materials, that exhibit ferromagnetic and piezoelectric properties and can be employed as a memory material are invented. This invention also relates to a non-volatile random accessible memory built on the basis of the invented composition of materials. A method for storing and retrieving two independent bits of information in a single cell of the memory of the present invention is also disclosed.

The composition of materials of the present invention comprises two layers of material. A first layer includes the elements of Pb, Cd, and Fe. A second layer is formed on the first layer. The second layer includes the elements of Cr, Zn, and an element selected from the group consisting of Te and Tl (denoted by "R"). The ratios are as defined in claim 1.

In the preferred embodiment, 0.25 ≤ (1-z-w) ≤ 0.32; and both layers also contain the elements of S, O, and Bi.

In a memory device of the present invention, two sets of parallel address lines are disposed orthogonally on the opposite sides of a planar substrate. The layers of the novel composition of materials, as described above, are disposed on both sides of the substrate above the address lines such that the second layers are the outermost, and each second layer is connected to an electrode. Each individual cell of the memory is defined by an intersection of the address lines of the two sets. The storage density of the memory is approximately eight mega bits per 1.2 cm x 1.2 cm chip.

In the memory of this invention, two independent bits of information can be magnetically stored in a single memory cell. This information is retrieved as a piezoelectric voltage between the electrodes generated in response to current pulses applied to the two address lines.

More specifically, to store and retrieve a first bit of information in a memory cell, two synchronized current pulses having the same amplitude and polarity are applied to two orthogonal address lines of the memory cell. The second bit of the same cell is stored and retrieved by applying two synchronized pulses of the same amplitude but opposite polarity to the same two address lines. The current pulses employed for storing binary information are such that the amplitude of a single pulse is not sufficient to alter the state of the stored information and two concurrent pulses are necessary for storing data. To retrieve the stored information non-destructively, the combined current pulses employed for retrieving the stored information should be insufficient to alter the stored information.

The memory cell of the present invention is non-volatile, random accessible, static, operates at high speed, requires low power, is readable and writable, and can be made in high density arrays.

### BRIEF DESCRIPTION OF THE DRAWINGS

These and other objects, features and advantages of the invention are more fully set forth in the accompanying Detailed Description in which:
Fig. 1 shows the cross-section of a preferred embodiment of the composition of materials of the present invention;
Fig. 2 illustrates the magnetization curve (BH loop) of a conventional ferromagnetic material;
Fig. 3 shows a substantially square BH loop of the composition of materials of the present invention;
Figs. 4 (a)-(h) illustrate the process of generating piezoelectric voltage in the composition of materials;
Figs. 5 (a) and (b) are the cross section and top-view of the preferred embodiment of the memory device of the invention;
Fig. 6 depicts a top view of address lines formed on a substrate.
Fig. 7 (a) and (b) illustrates the cross section of a wafer, before and after polishing.
Figs. 8 (a) and (b) show plots of voltage waveforms and current amplitude for the electrochemical process.
Figs. 9 (a) and (b) illustrate selecting bits of information in a memory cell;
Figs. 10 (a) and (b) illustrate storing a first bit of information;
Figs. 11 (a) and (b) illustrate retrieving the first bit of information;
Figs. 12 (a) and (b) illustrate storing a second bit of information;
Fig. 13 illustrates the current pulses used for retrieving the second bit of information; and
Fig. 14 symbolically summarizes the storing and retrieving information from the memory device.

### DETAILED DESCRIPTION

The present invention relates to a new composition of materials having ferromagnetic and piezoelectric properties, and to a random accessible non-volatile memory utilizing the new composition of materials. The memory of this invention is also capable of storing two independent bits of information in each storage cell of the memory in a similar fashion to the memory disclosed in the parent patent.

In accordance with the invention, the composition of materials comprises two layers of material. A first layer includes the elements of Pb, Cd, and Fe. A second layer is formed on the first layer. The second layer includes the elements of Cr, Zn, and an element selected from the group consisting of Te and Tl (denoted by "R"). Preferably, the layers of the composition of materials also contain the elements of S, O, and Bi.

The ratios are as defined in claim 1.

Hereinafter, the following notation will be used: the first layer will be referred to as Pb_{(1-x-y)} CdₓFe_{y} (or simply as "PbCdFe") and a second layer will be referred to as Cr_{(1-w-z)}Zn_{z}Te_{w} (or simply as "CrZnTe"), and the parameters x, y, z, and w are as described above.

Note that the boundary between the two layers are not precisely defined and the elements of one layer are likely to penetrate another one. Due to the fine dimensions of the structure, the extent of intermixing of the elements of the layers has not been previously determined. Accordingly, although this discussion refers to two distinct layers, it should be emphasized that a composition of materials where the elements of the layers are substantially intermixed is within the scope of this invention.

In the first layer, the values of x and y are within the ranges of 0.038 ≤ x ≤ 0.042 and 0.08 ≤ y ≤ 0.094. In the second layer, the values of w, z, and (1-w-z) are within the ranges of 0.34 ≤ z ≤ 0.45, 0.25 ≤ w ≤ 0.34 and preferably 0.25 ≤ (1-w-z) ≤ 0.32. More preferably, the values of w, z, and (1-w-z) in the second layer are within the ranges of 0.38 ≤ z ≤ 0.41, 0.28 ≤ w ≤ 0.31 and 0.25 ≤ (1-w-z) ≤ 0.32.

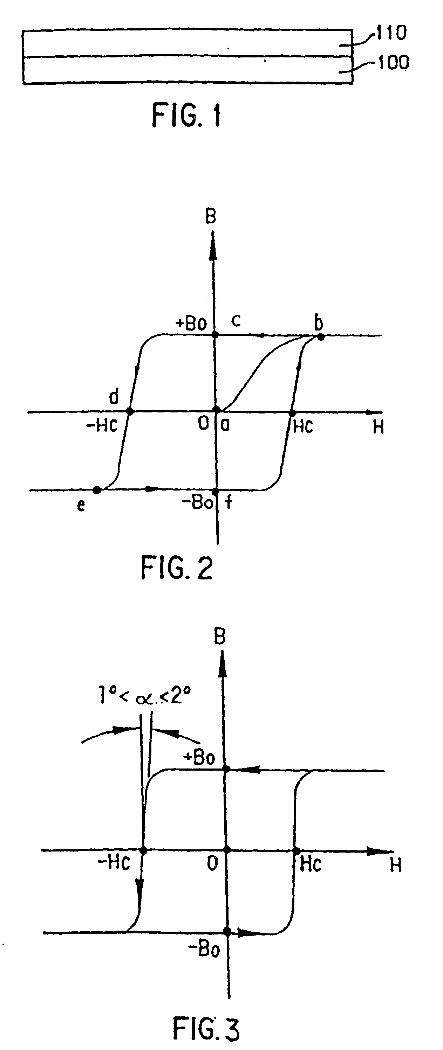

As depicted in Fig. 1, in the preferred embodiment, the composition of materials comprises a first layer 100 (Pb_{0.87}Cd_{0.04}Fe_{0.09}) and a second layer 110 (Cr_{0.3}Zn_{0.4}Te_{0.3}). Additionally, both layers 100 and 110 are saturated with S. The proportion of S in the first layer is about 4% compared to 96% of PbCdFe and in the second layer the proportion of S is also 4% as compared to 96% of CrZnTe. In addition, both the first and the second layers are saturated with O. Both the first and second layers also contain Bi, which is provided to the layers in the proper amount according to the process described below.

In the first layer, S bonds with at least portions of Pb and Fe to form PbS and FeS, and O combines with at least a portion of Fe to form Fe₂O₃. In the second layer, S bonds with Zn to form ZnS. In the preferred composition of materials, both the first and second layers are saturated with S and O, and both layers display high resistivity.

Bi is present in both layers of the preferred composition of materials to improve the sensitivity of the composition to applied fields such as a magnetic field. The amount of Bi incorporated in the layers can be adjusted according to the desired sensitivity. The sensitivity increases by adding Bi to the layers. However, an excess amount of Bi makes the composition undesirable sensitive and susceptible to environmental conditions such as mechanical vibrations or temperature variations. Thus the amount of Bi in the composition is typically determined by the required sensitivity and signal-to-noise ratio.

As indicated, the composition of materials of the present invention has ferromagnetic and piezoelectric properties. Due to the ferromagnetic properties, the composition has two stable magnetic states. The preferred composition of materials is very sensitive to external fields, such as a magnetic field generated by an electrical current. For example, if a conducting wire is formed immediately below the first layer of the composition, the portion of the composition of material in the vicinity of the wire can be switched between its two stable magnetic states by applying an electrical current on the order of only nano-amperes. In addition, the switching between the two stable magnetic states generates a detectable piezoelectric voltage vertically across the layers in the order of ten micro-volts. As will be apparent, these properties are essential for realizing a high capacity, non-volatile, and random accessible memory of the present invention.

Physical properties of the invented composition of materials are described below. Understanding of these properties will help to understand the operation of the memory device of the parent invention.

By way of background, a ferromagnetic material exhibits a permanent magnetic field in the absence of an external magnetic field. Such materials can be described in terms of a large number of small magnets known as magnetic dipoles. An external magnetic field applied to a ferromagnetic material aligns the magnetic dipoles within the material in the direction of the applied field, so that the total magnetic field within the material is the sum of the external field and the field generated by the aligned magnetic dipoles. When the influence of an external magnetic field is discontinued, the orientation of magnetic dipoles does not change, resulting in a constant magnetic field in the material. Magnetic information storage is based on this property of ferromagnetic materials.

Fig. 2 shows an exemplary magnetization curve of a typical ferromagnetic material. The magnetization curve is also referred to as a BH loop. The y axis in this figure represents magnetic induction B, which is an overall magnetic field in the material, and the x axis represents the magnetic field strength H of the external magnetic field Thus, the BH loop shows the change in the magnetic induction B with changing magnetic field strength H.

Let us consider the BH loop of Fig. 2 in further detail. Assuming that initially the orientations of magnetic dipoles of the ferromagnetic material are evenly distributed in all directions, the total value of B in the absence of the external field is zero (point "a" on the curve). When an external magnetic field is applied to the ferromagnetic material, the value of B gradually increases as H increases until it reaches a point where magnetic induction B begins to saturate (point "b" on the curve). In other words, when H reaches a certain value, B remains substantially at B₀ even if H is being increased. If, after saturation, the external magnetic field is decreased to H=0, magnetic field induction B does not return to the point "a" (B=0). Instead, the value of B remains approximately at B=B₀ (point "c" on the curve).

At point "c" the direction of the external magnetic field H is reversed. At approximately H=-H_{c}, the external field H changes the polarity of the field B, and, at point "e", the field saturates at the opposite polarity B=-B₀.

Increasing the field strength H causes B to change from point "e" on the curve to point "f" and then "b", as illustrated in Fig. 2.

Fig. 3 illustrates the BH loop of the composition of materials of the present invention. As in Fig. 2, the x-axis indicates the external field strength H and the y axis indicates the magnetic induction B. It is important to note that for the invented composition of the materials, the shape of the BH loop is substantially square with angle α between the y-axis and the BH loop at B=0 being approximately greater than 1° but less than 2°. Because the magnetization curve is substantially square, the magnetic induction B is almost invariably at one of the two discrete, stable states, namely +B₀ and -B₀. Accordingly, the novel composition of materials is suitable for storing binary information.

As indicated, the composition of materials of the present invention also has piezoelectric properties. In general, a piezoelectric voltage is generated as a result of mechanical pressure being applied to a piezoelectric material. In the present invention, a mechanical pressure, applied to the composition of materials outwardly from within the composition so as to stretch the composition in a direction substantially perpendicular to the plane of the layers, results in a piezoelectric voltage generated across the layers. In the memory device of the present invention, the mechanical pressure is produced by a changing in the magnetic state of the composition of materials as discussed in further detail below.

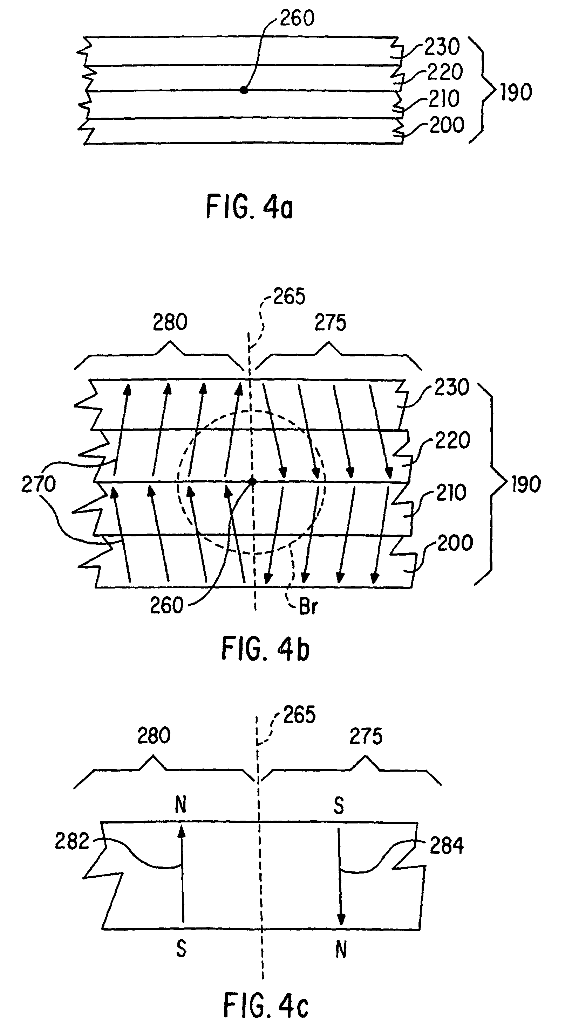

To aid in understanding the piezoelectrical properties of the composition of materials, an illustrative structure is shown in Fig. 4 (a). The properties of the composition of materials are explained in conjunction with Figs. 4 (b)-(h).

Fig. 4 (a) illustrates a structure 190 comprising two layers of the composition of materials of the present invention. Specifically, the structure comprises a first PbCdFe layer 220, a first CrZnTe layer 230, a second PbCdFe layer 210, a second CrZnTe layer 200. In addition, all the layers also contain S, O, and Bi. A wire 260 runs parallel to the layer through the middle of the structure (i.e. between two compositions of materials).

As shown in Fig. 4 (b), an electrical current applied to wire 260 in a direction pointing down onto the page generates a substantially circular magnetic field around the wire (indicated by a circle Bᵣ) in the clockwise direction (indicated by the arrow). Arrows 270 illustrate the directions of the magnetic dipoles in the layers under the influence of this external field. At this point, the structure can be viewed as divided into two sections 275, 280 that are symmetric about a vertical axis 265 perpendicular to wire 260 as shown in Fig. 4 (b). The dipole arrangement in the sections 275, 280 is equivalent to two magnets of the same strength having north and south poles as indicated by arrows 282 and 284 in Fig. 4 (c). The length of each arrow represents the amplitude of the magnetic induction B of the corresponding magnet. Due to the attraction between the South pole S and the North pole N of each magnet, the structure is mechanically compressed in the direction perpendicular to the layers of the structure.

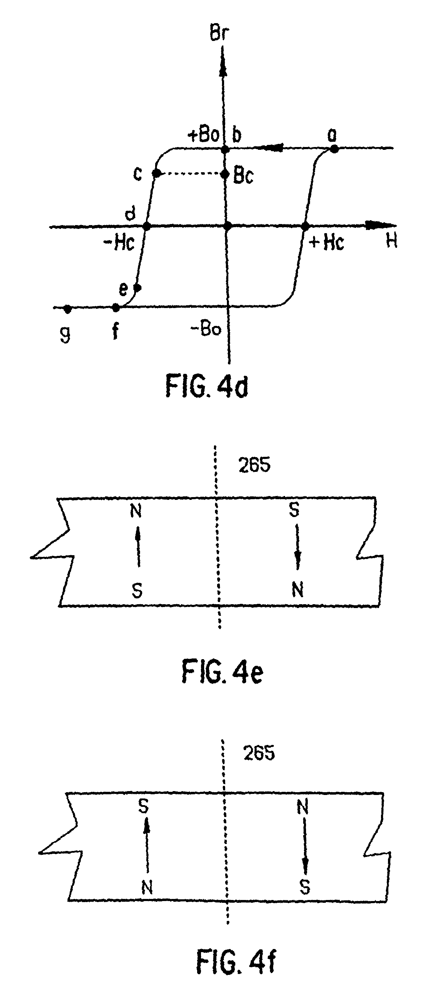

The BH loop of the magnetic induction Bᵣ is shown in Fig. 4 (d). As described previously the BH loop is substantially square, exhibiting two discrete, stable magnetic states, +B₀ and -B₀.

Additionally, the magnetic field has a critical field strength H_{c} which is defined as the amplitude of the magnetic field strength that causes switching between +B₀ and -B₀. Consequently, if H is greater than H_{c}, the magnetic induction Bᵣ has a value +B₀. If H is less than -H_{c}, Bᵣ has a value -B₀.

Assume that initially under the influence of the applied external field, the magnetic state is described by point "a" on the curve of Fig. 4(d), where the induction is +B₀. To change the magnetic state of the composition of materials from +B₀ to -B₀, the current passing through wire 260 must be reduced to reduce the magnetic field strength H. When the current is zero the magnetic strength H is also zero (point "b" on the BH loop). As noted, due to its ferromagnetic properties, even without the external field, the magnetic state of the storage media remains at B₀, *i.e*., the information represented by the magnetic induction B₀ is retained.

When the direction of the current is reversed, the magnetic field strength continues to decrease. At point "c", the magnetic induction B reaches the value B_{c}, which is less than B₀. At this point, the dipole moment has been reduced, as shown in Fig. 4 (e), because the dipoles began to realign in the opposite direction. Accordingly, the mechanical pressure on the layers due to the attraction of the FeCr layers 200, 250 has been reduced. The change in the pressure on the layers causes piezoelectric voltage to be generated perpendicularly across the layers. At point "d", where H=-H_{c} and the magnetic induction B is zero, the pressure applied to the layers is minimal because the dipoles are aligned in different directions. At this point, the induced piezoelectric voltage reaches its maximum value, due to the maximum change in the pressure on the layers.

As H continues to decrease below -H_{c}, the magnetic state switches from point "d" to the point "e" and then to point "f" where it reaches the second stable state B=-B₀. Fig. 4 (f) shows that at point "f" the poles of the magnets have been reversed. Thus, at point "f", the mechanical pressure on the layer returns to its initial value, reducing the piezoelectric voltage. Increasing the reversed current further (from point "f" to point "g") does not increase the magnitude of the dipole moment and therefore does not increase mechanical pressure on the layers.

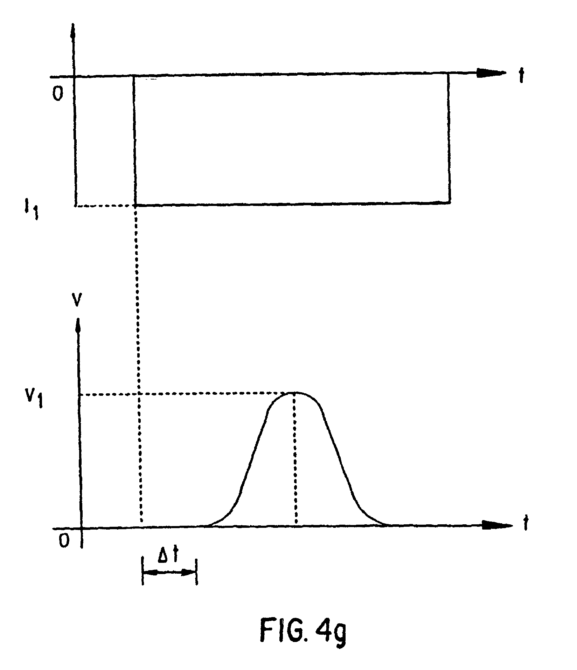

In Fig. 4 (g), the piezoelectric voltage generated in response to a current pulse is illustrated in the time domain. As illustrated, a piezoelectric voltage pulse is delayed from the time of the application of the current pulse. Note that the amplitude of the current pulse applied to the wire (-I) should be sufficient to switch B₀ to -B₀.
Similarly, switching from the magnetic state -B₀ to +B₀ also generates a piezoelectric voltage pulse.

As indicated in Fig. 4 (d), a current that generates a field having an amplitude greater than H_{c} is required for switching between the magnetic states. If, however, a current of a lesser amplitude causes B to assume a value indicated by point "c" in Fig. 4 (d). At this point, the magnetic state is unstable. In such a case, the magnetic induction B tends to oscillate between the values of B₀ (point "b") and B_{c} (point "c"). The amplitude V₂ of the resulting piezoelectric voltage pulse is smaller than the amplitude of the pulse generated as a result of switching from +B₀ to -B₀.

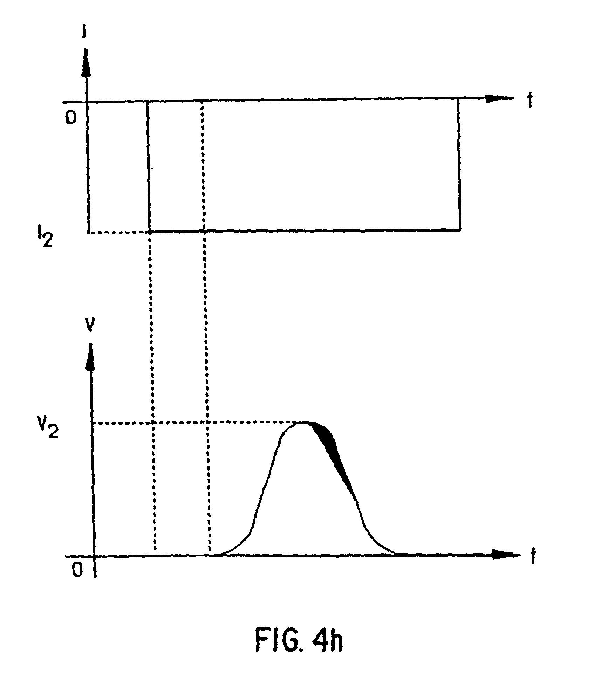

Fig. 4 (h) shows a current pulse I which causes B to assume the value B_{c}. The piezoelectric voltage pulse, generated in response to this current is shown in the lower portion of the figure. The shaded area reflects the oscillation between the two states (B_{c} and +B₀), as it would be observed on an oscilloscope. As described subsequently, the piezoelectric voltage generated in response to the current that disturbs but does not switch the magnetic states, can be employed for reading magnetically stored information.

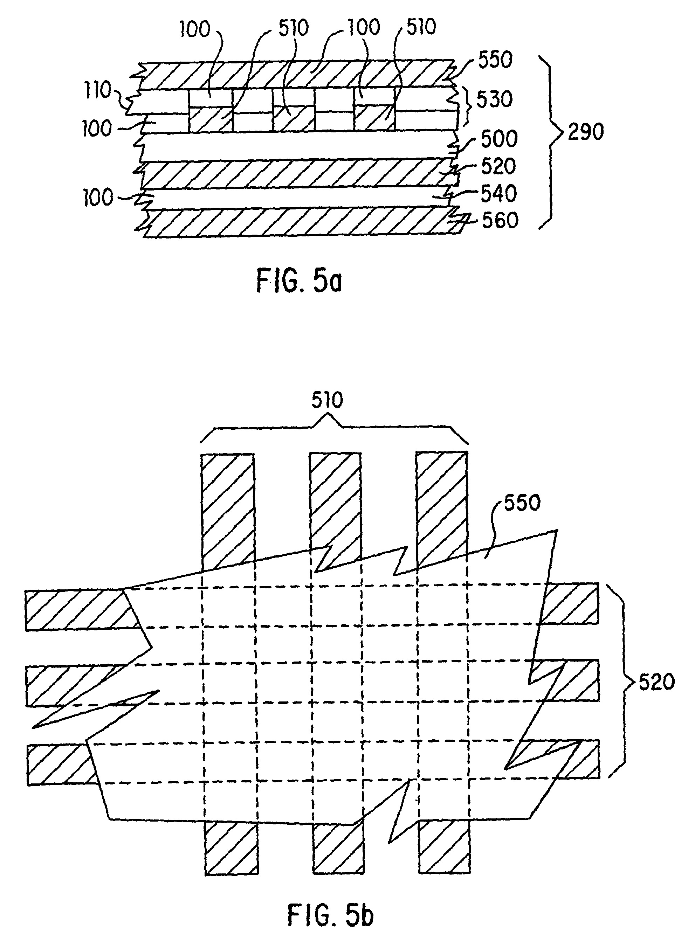

Figs. 5 (a) and (b) illustrate the cross-section (not to scale) and the top-view of the preferred embodiment of a portion of the memory device 290 of the present invention. The memory device comprises a silicon planar substrate 500, first address lines 510 formed on one surface of the substrate, and second address lines 520 orthogonal to the first lines formed on the opposite surface of the substrate. A first 530 and a second 540 of the composition of materials of the present invention are disposed on the opposite sides of the substrate over the address lines. Electrodes 550, 560 are connected to the compositions of materials 530, 540 respectively. Note that, in the composition of materials 530 and 540, the portion located between the address lines comprise both layer 100 of PbCdFe and layer 110 of CrZnTe. However, only the CrZnTe layer 100 is present above the address lines.

The first and second address lines are silver strips approximately 1µm wide and approximately 1µm thick. The spacing between the adjacent address lines is approximately 4.75µm. Each composition of materials 530 and 540 comprises the first layer and the second layer of the present invention described above. The first and second layers of 530 and 540 are sequentially formed on the Si substrate with the two second layers being the outermost on both sides of the substrate. Preferably, each layer is approximately 0.7 µm thick so that each combination of materials 530 and 540 is approximately 1.4 µm thick. The substrate is approximately 140 µm thick and the electrodes are about 1µm thick silver layers formed on the second layers of 530 and 540.

In the memory device of the present invention, the intersection and its neighboring area of the first and second address lines, formed on the opposite sides of the substrate, constitute a single storage cell. As in the memory disclosed in the parent patent, each storage cell of the memory of the present invention is also capable of storing two independent bits of binary information. Given the dimensions of the address lines and the spacing between them, the storage density of the memory of the present invention is approximately eight mega bits per 1.2 cm x 1.2 cm chip.

Next the fabrication of the combination of materials and memory device of the present invention are described. Preferably, the fabrication takes place in a class 100 clean room environment.

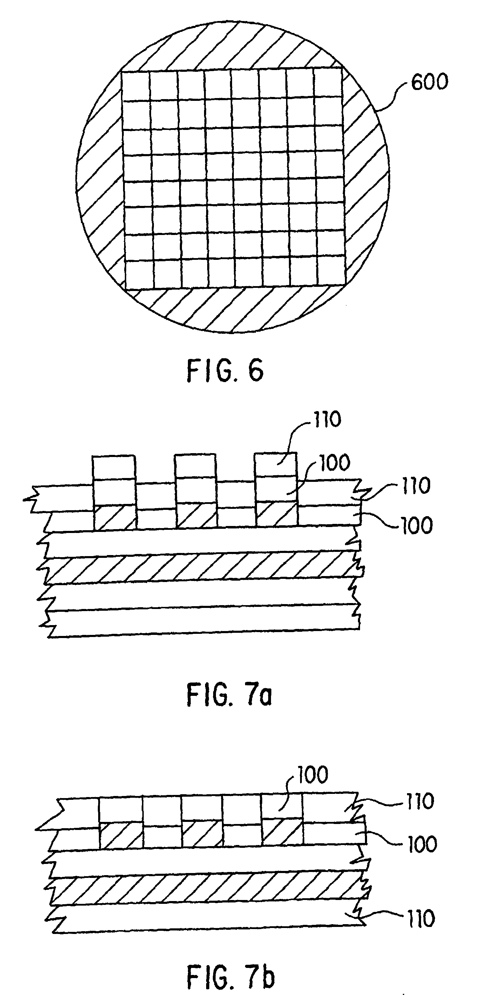

The fabrication of the memory device begins with building the first and second address lines onto a substrate. First, approximately 1µm thick silver layers are deposited onto the opposite surfaces of a silicon planar substrate which is approximately 150 µm thick and three inches in diameter. Alternatively, other materials having low electrical resistivity, such as gold, aluminum or platinum, can be used instead of silver to form the address lines. The deposition of the silver layer is conducted by a conventional technique such as thermal evaporation, e-beam evaporation, or sputtering. The deposited silver layers are then photolithographically patterned and etched to form a series of metal strips, each having a width of approximately 1µm and the series of strips on one side of the substrate being orthogonal to the strips on the opposite side so that the strips on both sides of the substrate form a cross-barred structure. The top view of the substrate after this step is depicted in Fig. 6 where the stripes are formed in the centered square portion of a circular silicon substrate 600 which is approximately three inches in diameter. Preferably, after this step, the silver layers outside the square that contains the strips remain unetched so that the ends of all the strips are connected in this peripheral region of the wafer.

For convenience, the term "wafer" is used hereinafter to refer to the substrate together with various structures built upon the substrate at various steps during the fabrication process.

The next step is to deposit a thin layer of sulfur (S) onto both sides of the wafer with address lines formed on its two surfaces. Sulfur is deposited by exposing the substrate to sulfur vapor in a sealed chamber. The chamber has an air-tight partition dividing the chamber into upper and lower portions. Prior to the deposition of sulfur, the wafer is placed in the upper portion of the chamber and a desired amount of sulfur is placed in the low portion. Then, the sulfur is heated to 450 to 500°C so that sulfur vapor is formed in the lower portion of the chamber. Next, the partition is removed and sulfur vapor is introduced into the upper chamber. The wafer is then exposed to the sulfur vapor for about one minute. As a result, a layer of sulfur is formed on each surface of the wafer. Note that the exact thickness of sulfur formed on the wafer is not important as long as the amount of sulfur is sufficient to saturate the subsequently deposited layers.

Following the deposition of sulfur, layers Pb_{0.87}Cd_{0.04}Fe_{0.09} and Cr_{0.3}Zn_{0.4}Te_{0.3} are deposited sequentially onto both sides of the wafer. Prior to the deposition, a deposition source for each layer is prepared to contain the proper amount of components of each layer according to the ratios specified above.

Specifically, the deposition source is prepared by first mixing together proper amounts of powder of each required element to form a mixture. The typical size of particles in the powders of each element is about 2µm. Following the mixing, the mixture is pressed and baked to form the desired shape and dimensions. For example, for the deposition of layer Pb_{0.87}Cd_{0.04}Fe_{0.09}, powders of Pb, Cd and Fe are mixed in the proportions of 87:4:9. After the powders of Pb, Cd, and Fe are well mixed, the mixture is pressed in a mold to form a 1.5 x 1.5 x 1.5 cm³ cube. Typical pressure applied to form the cube is between 60 and 80 MPa. When the pressure is removed, the cube remains in the mold where it is heated to a temperature between 450° and 500°C using a microwave source. The temperature reaches 450° to 500°C in about one to two seconds. Thereafter, the heat is turned off and the cube is left in the mold to cool down to room temperature in the room temperature environment. In the preferred embodiment, the same system is employed for pressing the mixture of powders in a mold and for heating it to the temperature specified above. Such system which integrates pressing and heating are known in the art. A cube for depositing Cr_{0.3}Zn_{0.4}Te_{0.3} layer is formed in the same fashion.

To reduce the grain size of the materials in the cubes, the cube for Pb_{0.87}Cd_{0.04}Fe_{0.09} is then immersed in liquid oxygen and the cube for Cr_{0.3}Zn_{0.4}Te_{0.3} is immersed in liquid nitrogen for about three hours. Thereafter, the cubes are removed from the liquid nitrogen or liquid oxygen and are placed in the room temperature environment to warm up to room temperature.

Next, each cube is employed for depositing the respective layer. The cubes are referred to as a deposition source for the corresponding layer. The Pb_{0.87}Cd_{0.04}Fe_{0.09} and Cr_{0.3}Zn_{0.4}Te_{0.3} layers are then sequentially deposited onto both sides of the substrate. The deposition can be accomplished using well-known methods. For example, in the preferred embodiment, a conventional plasma sputtering techniques is used. The sputtering is performed in a vacuum chamber utilizing Ar gas. In the vacuum chamber, the deposition source is placed at a distance above the center of the wafer. During the deposition of each layer, the temperature of the wafer is not controlled, however, it has been estimated that the temperature varies approximately between 90° and 220°C.

As described previously, prior to the deposition of the Pb_{0.87}Cd_{0.04}Fe_{0.09} and Cr_{0.3}Zn_{0.4}Te_{0.3} layers, the wafer has been covered with a thin layer of sulfur. During the deposition of Pb_{0.87}Cd_{0.04}Fe_{0.09} and Cr_{0.3}Zn_{0.4}Te_{0.3} layers, sulfur diffuses into and reacts with the deposited materials. As a result, after the deposition, both Pb_{0.87}Cd_{0.04}Fe_{0.09} and Cr_{0.3}Zn_{0.4}Te_{0.3} layers are saturated with sulfur, forming PbS and FeS in the first layer and ZnS in the second layer. The concentration of sulfur in both layers has been estimated to be 4% of weight compared to about 96% of Pb, Cd, and Fe combined in the first layer and 96% of Cr, Zn, and Te combined in the second layer.

During the deposition, a thickness sensor in the chamber is utilized to detect the thickness of the deposited layers. As indicated, in a preferred embodiment each Pb_{0.87}Cd_{0.04}Fe_{0.09} and Cr_{0.3}Zn_{0.4}Te_{0.3} layer should be approximately 0.7 µm thick, forming two structures, each approximately 1.4 µm thick, on the opposite surfaces of the wafer with the two Cr_{0.3}Zn_{0.4}Te_{0.3} layers being the outermost. Fig. 7 (a) illustrates the cross-sectional view of the wafer after this step. Since the silver address lines are 1 µm thick, the total thickness of the materials above the surfaces of the silicon substrate is 2.4 µm in the areas having the silver address lines and 1.4 µm in the areas between the silver address lines.

Both sides of the resultant structure are then polished to create smooth and planar surfaces such that the total thickness of materials deposited on both sides of the wafer is approximately 1.4µm. As illustrated in Fig. 7 (b), after polishing, the deposited materials between the address lines include both Pb_{0.87}Cd_{0.04}Fe_{0.09} and Cr_{0.3}Zn_{0.4}Te_{0.03} layers and remain approximately 1.4 µm thick. The deposited materials above the address line has been reduced to 0.4 µm thick, and consist of essentially Pb_{0.87}Cd_{0.04}Fe_{0.09} layer.

Thereafter, Bi and O are added to the layers by an electrochemical process that employs heated water containing Bi₂O₃. Specifically, high purity water is first heated to approximately 97°C in a stainless steel container with a continuously stirring device on the bottom of the container. Bi₂O₃ powder is then added to the heated water. Preferably, the weight of Bi₂O₃ powder is about 4-6% and the weight of water is about 94-96%.

Prior to the electrochemical process, the address lines on both sides of the substrates should be connected to a single electrode. Recall that in the preferred embodiment, the address lines are etched such that the lines on each side are connected around the perimeter of the wafer. The substrate is then immersed in the water containing Bi₂O₃ powder. The water containing Bi₂O₃ powder is maintained at a temperature of 97°C and is continuously stirred. A voltage having specific characteristics described below is then applied between the container and the electrode that is connected to all the address lines. Under the influence of the applied voltage, Bi and O diffuse into the deposited layers. As a result, Bi and O are incorporated into the deposited materials.

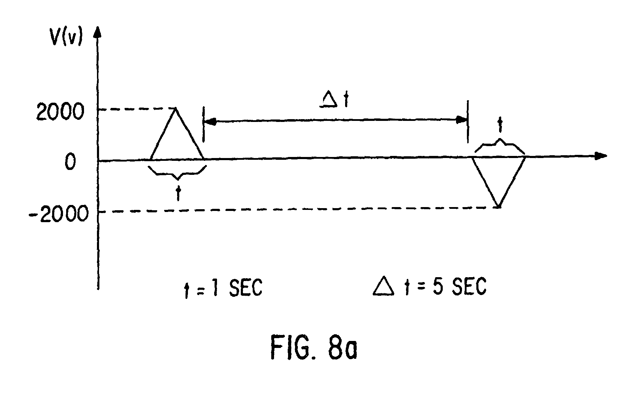

The electrochemical process described above takes twenty-eight days during which the voltages are applied in the following manner. During the initial forty-five hours, high voltage pulses illustrated in Fig. 8 (a) are applied to the bath. The applied voltage waveforms of Fig. 8(a) comprise a series of voltage pulses having amplitudes of two thousand volts and alternating polarities. Each pulse has a shape of a triangle and a duration of about one second. The time intervals between centers of the adjacent pulses is about six seconds. After the initial forty-five hours, and until the end of the process, an electrical potential of sixty volts is applied to the substrates. Every four hours the polarity of the sixty volt potential is changed. During this process, the stainless steel container is kept at a ground potential and the potential applied to the wafer alternates between positive and negative sixty volts. Throughout the process the liquid in the container is maintained at 97°C and is continuously stirred.

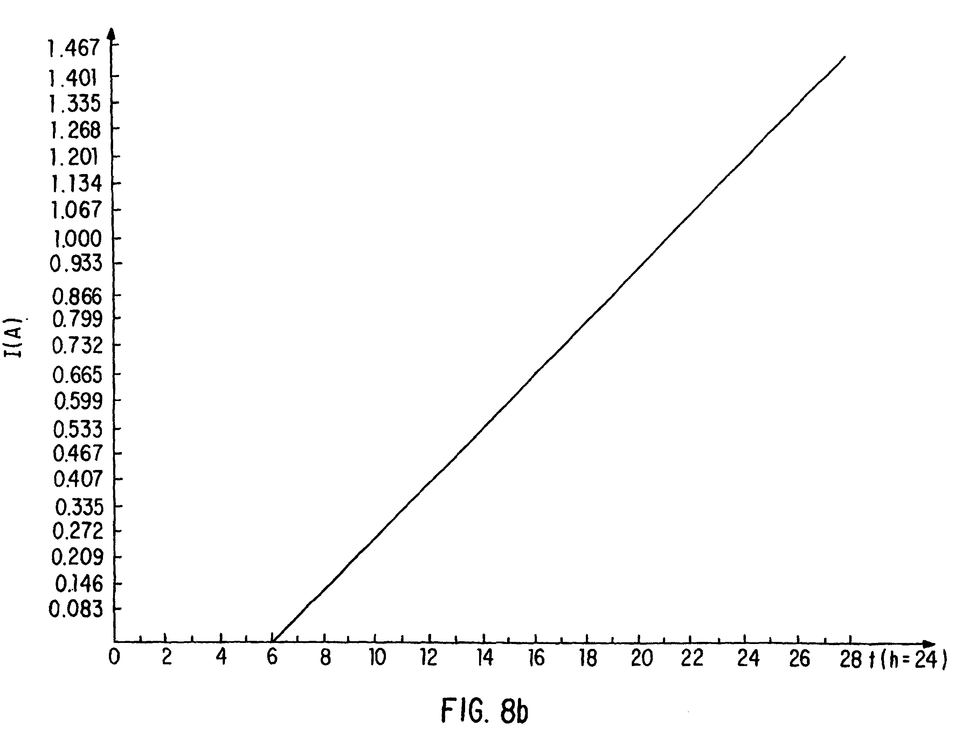

The amplitude of the current flow in the liquid is continuously monitored. Fig. 8 (b) illustrates the current I (in Amperes) in the water during the entire twenty-eight days of the process for one hundred three inch wafers processed concurrently in the electrode bath. In Fig. 8(b), the days are indicated on the horizontal axis as "t" and the current is indicated on the vertical axis as "I".

At the end of the twenty-eighth day, when the current passing the liquid is about 1.5 Amperes, the electrode is disconnected from the substrates and the substrates are removed from the bath. At this point, the layers are saturated with O and a sufficient amount of Bi has been incorporated in the layered structure. Note that in a different embodiment, ion implantation techniques can also be employed for introducing these elements into the layered structure.

Subsequently, approximately 1µm thick layers of silver are deposited onto both surfaces of the wafer to form electrodes 550 and 560 of Fig. 5 (a) and (b). Thus, the structure as shown in Fig. 5 has been formed.

The wafer is then diced into 1.2 cm × 1.2 cm square chips. Each surface of a chip contains two thousand and forty-eight address lines. The dimensions and spacing between the address lines are discussed above. Since each intersection of the two address lines on the opposite surfaces of the chip forms a storage cell, there are approximately four million storage cells in each chip. Since two independent bits of information can be stored in each storage cell of the chip, each 1.2 cm × 1.2 cm chip is therefore capable of storing approximately eight mega bits of information.

Thus, at the completion of this procedure, a novel two-dimensional memory array has been manufactured, where the area in the vicinity of each intersection of the orthogonal address lines 510 and 520 is an individual cell of memory. The storage and retrieval of binary data in each storage cell is discussed in detail below.

As shown in Figs. 5 (a) and 5 (b), the set of metal strips on the lower surface of the Si substrate forms a first set of addressing lines 520, (referred to as X lines), and the set of metal strips on the upper surface of the substrate forms a second set of addressing lines 510, (referred to as Y lines). When two electrical currents Iᵢ and Iⱼ are simultaneously applied to a given line Xᵢ of the X lines and a line Yⱼ of the Y lines, respectively, a storage cell (i,j) at the intersection of Xᵢ and Yⱼ is selected. By properly choosing the magnitudes and polarities of the currents Iᵢ and Iⱼ, information can be stored or retrieved from the storage cell (i,j). Thus, the memory array, comprising the storage cells of the present invention, is random accessible.

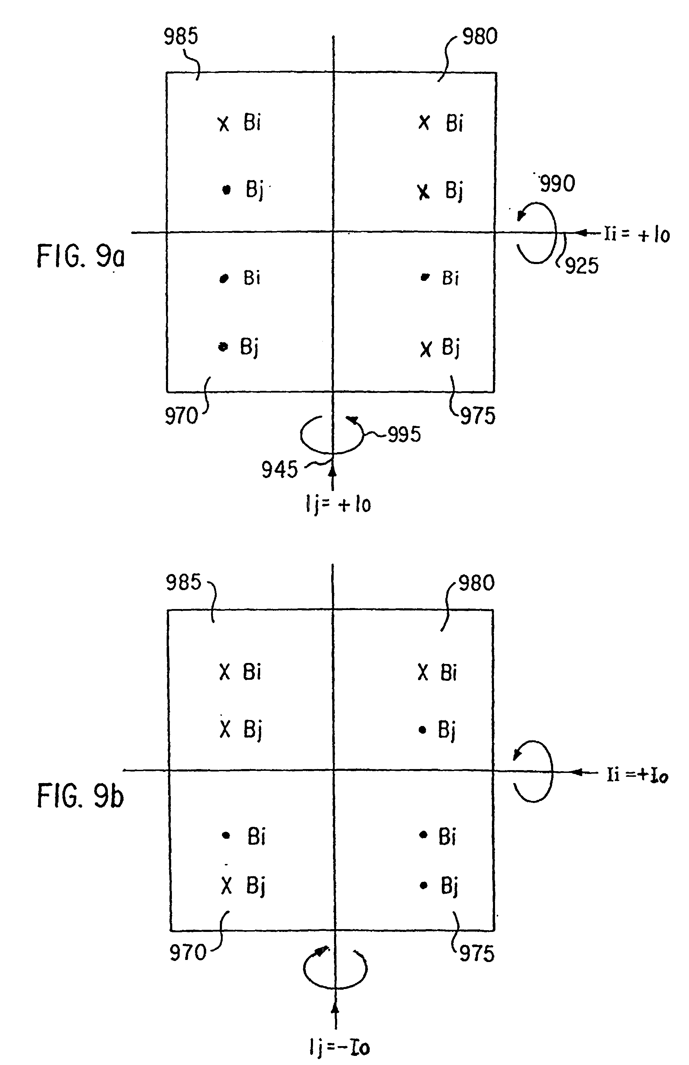

The process of storing information in a cell will be apparent from Figs. 9(a), 9(b), 10(a), 10(b), 11(a), 11(b), 12(a) and 12(b), 13 and 14. Figs. 9(a) and (b) illustrate top views of a single storage cell.

As illustrated in Fig. 9(a), the orthogonal address lines 925, 945 divide the cell into four quarters 970, 975, 980 and 985. As discussed below, a first bit of information is magnetically stored in the quarters 970 and 980 and a second bit is magnetically stored in the quarters 975 and 985. For simplicity, the quarters 970 and 980 where a first bit of information is stored, are collectively referred to as carrier "a" and the quarters 975 and 985 where a second bit is stored are collectively referred to as a carrier "b".

To store a bit of information in one of the carriers of the storage cell, two electrical currents having specified amplitudes and polarities are applied to first and second address lines, 925 and 945, respectively. Information is retrieved from one of the carriers by applying two electrical currents to the address lines and measuring a piezoelectric voltage generated between the upper and lower electrodes.

The current applied to the first address line is denoted by Iᵢ, and the current applied to the second address line is denoted by Iⱼ. The directions of Iᵢ and Iⱼ are indicated by the arrows at the address lines. In the preferred embodiment, the currents Iᵢ and Iⱼ have the same amplitude, I₀. Each current generates an induced circular magnetic field around the corresponding address line as illustrated by the arrows 990 and 995.

The directions of the magnetic fields Bᵢ and Bⱼ induced by Iᵢ and Iⱼ in each quarter is illustrated in Figs. 9(a) and (b). A dot (•) indicates that the field is in the "up" direction and a cross (x) indicates that the field is in the opposite or "down" direction.

As illustrated in Fig. 9(a), in the quarters 985 and 975 (carrier "b"), Bᵢ and Bⱼ have the opposite directions and thus cancel each other out. For this reason the currents illustrated in Fig. 9 (a) do not affect the information stored in carrier "b". on the other hand, in the quarters 970 and 980 (carrier "a"), the fields Bᵢ and Bⱼ are induced in the same direction. Accordingly, these fields enhance each other and, thus, can alter the stored information.

Thus two currents having the same polarities and amplitudes applied to the address lines, affect only the magnetic state of carrier "a" and thereby select this carrier. Likewise, two negative pulses also select and can store data in carrier "a". Note also that the amplitudes of the currents that select carrier "a" do not have to be equal, as long as their combined effect does not change the magnetic state in carrier "b".

Fig. 9(b) illustrates the process of selecting carrier "b". Two currents, having opposite polarities, Iₗ=+Iₒ and Iⱼ=-Iₒ, are applied to the first and second address lines respectively. As illustrated using the dot and cross convention described above, in carrier "a", the fields generated by these currents cancel each other out, without affecting the magnetic state. In carrier "b", however, the fields generated by these currents enhance each other so that carrier "b" is selected.

Similarly, two currents Iᵢ=-Iₒ and Iⱼ=+Iₒ applied to the two address lines also select carrier "b". Thus two currents with the same amplitude but the opposite polarities select carrier "b" for storing or retrieving information.

To store information, the amplitudes of the two currents combined should also be sufficiently large to switch the magnetization of a carrier between the magnetic states B₀ and -B₀. In addition, the amplitudes of the two currents combined should be sufficiently small so that a single current alone is unable to change the magnetic state of a carrier. This is necessary to assure that only one carrier in the memory array is selected by two signals applied on two address lines.

To non-destructively retrieve the stored information, the amplitudes of the two currents combined should be small enough that the induced field is insufficient to change the magnetic state of the carrier. The combined amplitudes, however, should also be sufficient to disturb the magnetic state of the carrier so as to generate a piezoelectric voltage across the device structure. As discussed above, the direction of this piezoelectric voltage represents the binary data stored in the carrier.

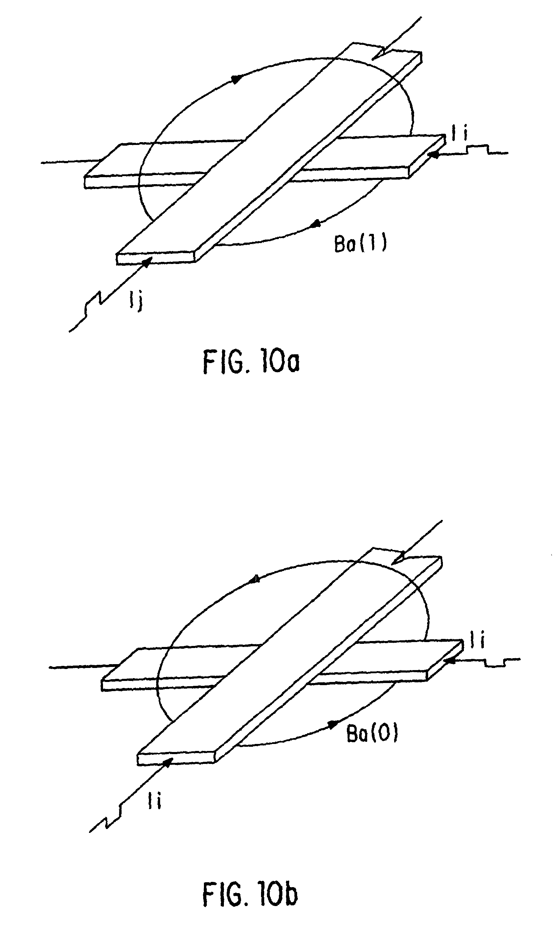

By way of illustration, Fig. 10(a) depicts the process of writing a binary "1" into carrier "a" using synchronous current pulses on the two address lines. Initially, all the cells of the array are assumed to be in the "0" state which corresponds to a magnetic induction of -B₀. To write a binary "1", two synchronized current pulses, Iᵢ=5.0µA and Iⱼ=5.0µA are applied to the two address lines, respectively. This generates a magnetic field H which magnetizes the compositions of materials of a memory cell. The magnetic induction Bₐ of these layers is depicted in Fig. 10(a) as a closed loop with an arrow. For the structure of Fig. 5 having the dimensions described above, the amplitude of the critical current I_{c} necessary to generate the critical field strength H_{c} required for switching between the two discrete states is approximately 8.0 µA. At the cell where the two pulses coincide, the two +5.0µA currents create a field H that would be generated by applying a 10.0µA current. Since this current is greater than I_{c}, the magnetic induction becomes B₀ so that a binary "1" is stored. As explained previously, after the pulses have been applied, the magnetic induction at the cell Bₐ remains equal to Bₒ without requiring additional refresh or power, so that a binary "1" is retained in carrier "a".

As shown in Fig. 10(b), to store a binary "0" into carrier "a", two synchronized current pulses, Iᵢ=-5.0µA and Iⱼ=-5.0µA are applied to the address lines respectively. Since the sum of these currents is -10.0µA, which is less than -I_{c}, the current pulses switch the magnetic state from +B₀ to -B₀.

Switching between +B₀ and -B₀ generates a piezoelectric voltage pulse between the first and second electrodes after a delay Δt from the time of the application of the current pulses. The piezoelectric pulse is positive for switching from +B₀ to -B₀ and is negative for switching from -B₀ to +B₀. If the magnetic state does not change, no piezoelectric pulse is generated. Accordingly, the generated piezoelectric voltage pulses can be employed to verify that a bit of binary data has been stored.

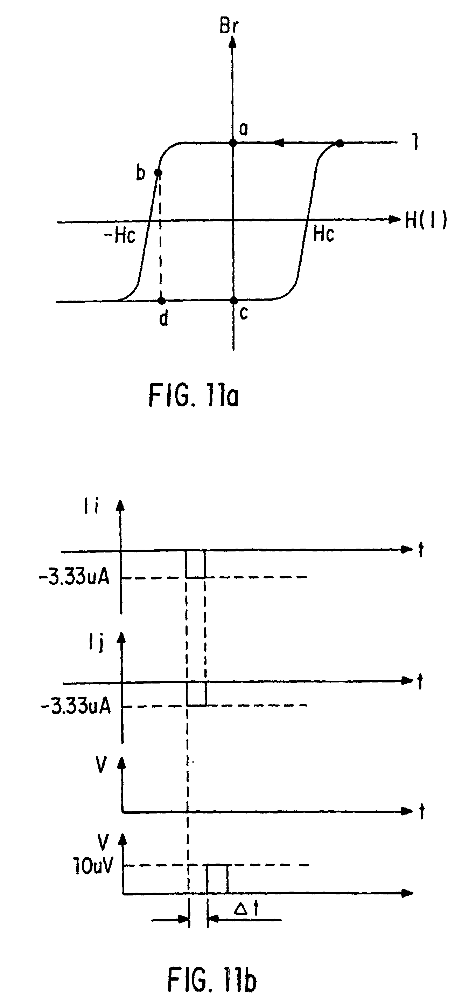

To non-destructively retrieve information stored in carrier "a" of the cell, two synchronized current pulses, Iᵢ=3.33µA and Iⱼ=3.33µA, are applied to the address lines. Since the critical current I_{c}=-8.0µA, the 6.66µA sum of these currents cannot switch the magnetic states from +B₀ to -B₀. This current, however, is sufficient to disturb the magnetic state without complete switching. As shown in Fig. 11(a), assuming a binary "1" is stored in carrier, the applied current pulses change Bₐ from a value corresponding to a point such as "a" on the magnetization curve to the value corresponding to point "b" on the curve. Because of the previously discussed piezoelectric properties of the cell, this change in the magnetic induction generates a positive piezoelectric voltage of approximately +10µV, indicating that a "1" is stored in carrier.

If a "0" is stored in carrier "a", the applied current pulses will change Bₐ from a value corresponding to point "c" to the value corresponding to point "d" on the curve. In this case, however, the magnetic induction of carrier "a" remains at Bₐ=-B₀, so that no piezoelectric voltage is generated, indicating that a "0" is stored. The information stored in the memory cell is not changed during the reading process because I is less than I_{c}.

This process of non-destructively retrieving data is illustrated in the time domain in Fig. 11(b). The delay Δt between the piezoelectric voltage pulse and the input synchronized current pulses is theoretically estimated to be less than 1.0ns. This delay measured from the chip described above is about 1-2ns.

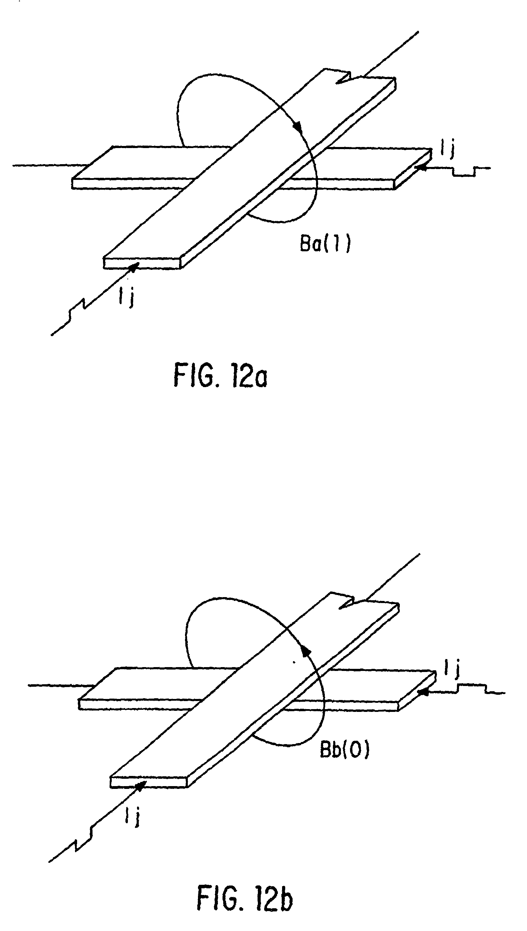

The storage and retrieval of data in carrier "b" is performed similarly. As shown in Fig. 12(a), two synchronized current pulses, Iᵢ=-5.0µA and Iⱼ=+5.0µA are applied to the address lines to store a "1" in carrier "b". As discussed above, such current pulses do not affect carrier "a". At the point where the pulses coincide, a field which is equivalent to the field induced by the 0.1µA current is induced. Since this value is greater than I_{c}=8.0µA, a "1" is stored in carrier "b". As shown in Fig. 12 (b), the current pulses Iᵢ=+5.0µA and Iⱼ=-5.0µA are applied to store a "0" in carrier "b".

Switching from "1" to "0" in carrier "b" generates a piezoelectric voltage pulse between the electrodes at a delayed time Δt, and switching from "0" to "1" also generates a piezoelectric voltage pulse. If the state does not change, no piezoelectric voltage is generated.

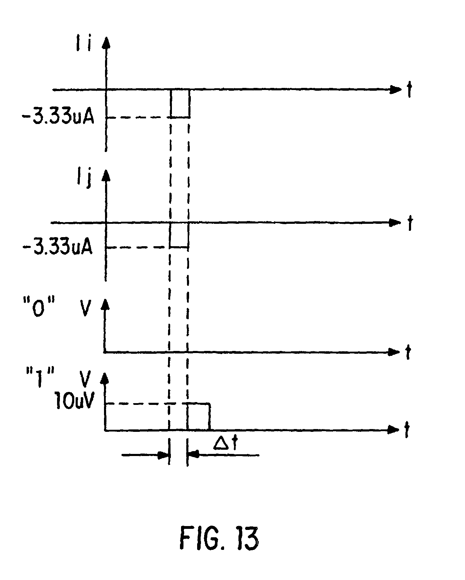

The data stored in carrier "b" is non-destructively retrieved in a similar fashion as discussed in conjunction with carrier "a". As shown in Fig. 13, to non-destructively retrieve data stored in carrier "b", two synchronized current pulses, Iᵢ=3.33µA and Iⱼ=-3.33µA are applied. The combined magnitudes of these pulses are not sufficiently large to switch the magnetic state in carrier "b". If a "0" is stored, the current pulses would not change the magnetic induction B_{b} of carrier "b", and no piezoelectric voltage between the electrodes would be generated. If a "1" is stored in carrier "b", the applied current pulses would disturb the magnetic state B_{b}=B₀ but not change it, generating a positive piezoelectric voltage pulse after a delay Δt. Thus, for carrier "b", the absence of piezoelectric voltage pulse indicates that a "0" is stored, and a positive piezoelectric voltage indicates that a "1" is stored.

In the above paragraphs, a non-destructive method of retrieving data from carriers "a" and "b" has been described. Alternatively, information can also be destructively retrieved from the carriers. Recall that changing the magnetic state of a carrier generates a piezoelectric voltage between the two electrodes. This piezoelectric voltage identifies the information stored in carrier. For example, to destructively retrieve data from carrier "a", two synchronized current pulses Iᵢ=5.0µA are applied to the two address lines respectively. These pulses write a "0" in carrier "a". If a "0" has been stored in carrier "a", these current pulses would not change the magnetic state of carrier "a" and therefore, no piezoelectric voltage will be detected between the electrodes. However, if a "1" has been stored in carrier "a", the current pulses will change the magnetic state of carrier from the state corresponding to "1" to the state corresponding to "0", thereby generating a piezoelectric voltage between the electrodes. Note that in such retrieve process, the stored information may be changed. Therefore, a restoring process to rewrite the stored information back to the carrier is normally employed after the destructive retrieving.

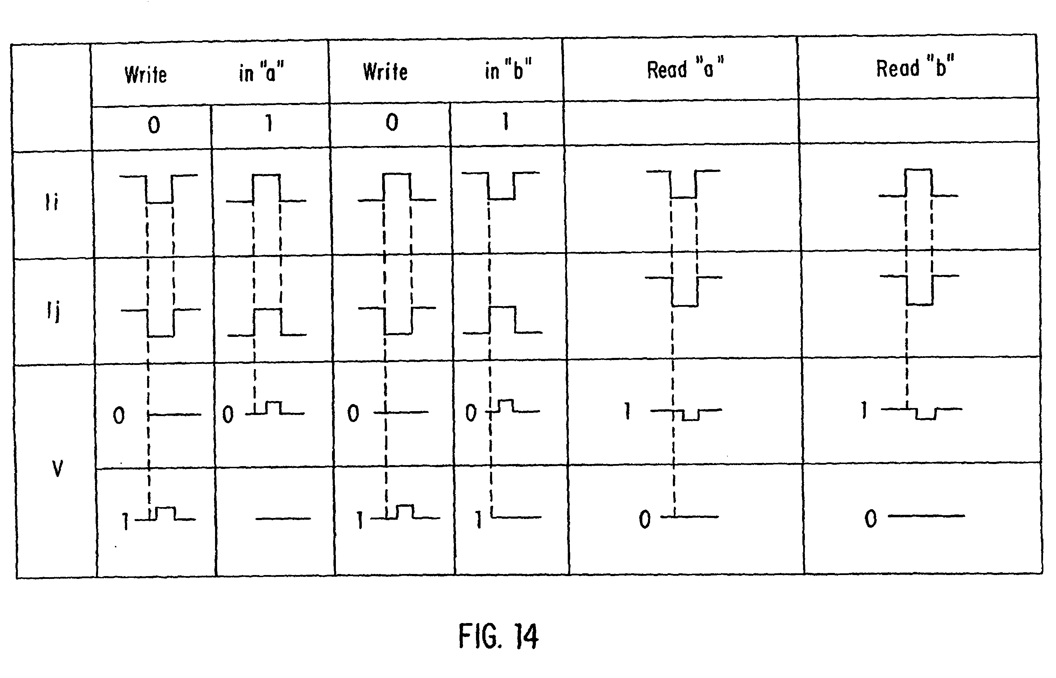

Fig. 14 symbolically summarizes the above-described methods of storing and retrieving data from carriers "a" and "b" of the memory device. Note that in this figure the wave forms are shown as symbolic representations and do not depict the actual signals. Two synchronized currents Iᵢ=3.33µA and Iⱼ=3.33µA are utilized for non-destructively retrieving information from carrier "a". Similarly, two synchronized currents Iᵢ=-3.33µA and Iⱼ=3.33µA can be used to retrieve data from carrier "b". Also a method of destructive readout can be employed. For example, two synchronized current pulses Iᵢ=5.0µA and Iⱼ=5.0µA, that write a "1" in carrier "a", can be applied and the piezoelectric voltage generated in response to these pulses would identify the previously stored data, thereby destructively retrieving data from carrier "a".

Another property of the memory of this invention is that a sufficient voltage applied between the two electrodes prevents storing information in this memory. This property can be utilized to selectively store information in a memory when several memory chips are employed concurrently in the same storage device. The voltages sufficient to prevent storing information in the memory of the invention is approximately 200µV. When this voltage is applied to the electrodes, the application of currents to the address lines does not change the stored information.

One of the advantages of the memory device of the present invention is its low power consumption in comparison with the prior art non-volatile magnetic memory devices. Since the storage media employed in this device is highly sensitive to the magnetic field generated by the driving currents, it can quickly store binary values at relatively small driving currents, about 5.0µA on each line. Consequently, the power consumption is low for storing and retrieving data.

Note also that the retrieval of information as a piezoelectric voltage generated between the electrode is intrinsically faster than generating induced electromagnetic voltage as it was done in prior art magnetic memory devices.

Typically, the delay between the current pulses and corresponding piezoelectric voltage is in the range of subnanoseconds. Switching between a "1" and a "0" usually takes a few nanoseconds.

Thus a memory device which is random accessible, non-volatile, and operates in static mode has been described. This memory device offers high-speed operation, low power consumption, and storage of information at high density.

The invention is not to be limited by the above exemplary disclosure, but only by the following claims.

## Claims

1. A substrate comprising a first layer of material and a a second layer of material both disposed thereon, wherein:
the first layer of material comprises the elements of Pb, Cd, and Fe, wherein the ratio between Pb, Cd, and Fe in the first layer is (1-x-y) :x:y where the values of x and y are within the ranges of 0.038<x<0.042 and 0.080<y<0.094; and
the second layer of material formed on the first layer, the second layer of material comprising the elements of Cr, Zn, and R where R is an element selected from the group consisting of Te and Tl, wherein the ratio between Cr, Zn and R in the second layer is (1-z-w):z:w where the values of z and w are within the ranges of 0.34<z<0.45 and 0.25<w<0.34;
wherein the first and second layers together exhibit ferromagnetic and piezoelectric properties.

2. The substrate of claim 1 wherein the first layer further comprises an element selected from the group consisting of S and Se.

3. The substrate of claim 1 wherein the first layer further comprises the element S, and at least portions of Pb and Fe bond with S to form PbS and FeS.

4. The substrate of claim 2 wherein the first layer further comprises the element O, and at least a portion of Fe bonds with O to form Fe₂O₃.

5. The substrate of claim 4 wherein the first layer further comprises the element Bi.

6. The substrate of claim 2 wherein the value of x is substantially 0.04.

7. The substrate of claim 6 wherein the value of y is substantially 0.09.

8. The substrate of claim 1 wherein the second layer comprises the elements of Cr, Zn, and Te.

9. The substate of claim 1 wherein the second layer further comprises an element selected from the group consisting of S and Se.

10. The substrate of claim 1 wherein the second layer further comprises the element S, and at least a portion of Zn bonds with S to form ZnS.

11. The substrate of claim 9 wherein the second layer further comprises the element O.

12. The substrate of claim 11 wherein the second layer further comprises the element Bi.

13. The substrate of claim 9 wherein the value of (1-z-w) is within the range of 0.25 ≤ (1-z-w) ≤ 0.32.

14. The substrate of claim 13 wherein the value of z is within the range of 0.38 ≤ z ≤ 0.41.

15. The substrate of claim 14 wherein the value of w is within the range of 0.28 ≤ w ≤ 0.31.

16. The substrate of claim 9 wherein the value of z is substantially 0,4.

17. The substrate of claim 16 wherein the value of w is substantially 0.3.

18. The substrate of claim 1 wherein the first layer is substantially 0.7µm thick.

19. The substrate of claim 18 wherein the second layer is substantially 0.7µm thick.

20. A composition of materials that exhibits both ferromagnetic and piezoelectric properties, comprising:
a first layer of material comprising the elements of Pb, Cd, Fe, S, and O, wherein the ratio between Pb, Cd, and Fe is (1-x-y):x:y and the values of x and y are within the ranges of 0.038 ≤ x ≤ 0.042 and 0.080 ≤ y ≤ 0.094, wherein the first layer is saturated with S and O, and wherein at least portions of Pb and Fe bond with S to form PbS and FeS and at least a portion of Fe bonds with O to form Fe₂O₃; and
a second layer of material formed on the first layer, the second layer of material comprising the elements of Cr, Zn, Te, S, and O wherein the ratio between Cr, Zn, and Te is (1-z-w) :z:w and the value of (1-z-w), z, and w are within the ranges of 0.25 ≤ (1-z-w) ≤ 0.32, 0.38 ≤ z ≤ 0.41 and 0.28 ≤ w ≤ 0.31, wherein the second layer is saturated with S and O, and wherein at least a portion of Zn bonds with S to form ZnS.

21. The composition of claim 20 wherein the first and second layers further comprise the element Bi.

22. A method of manufacturing a substrate comprising a first layer of material and a a second layer of material both disposed thereon, wherein the method comprises the steps of:
forming the first layer of material on a substrate, the first layer comprising the elements of Pb, Cd, and Fe, wherein the ratio between Pb, Cd, and Fe is (1-x-y) :x:y and wherein the values of x and y are within the ranges of 0.038<x<0.042 and 0.080<y<0.094; and
forming the second layer of material on the first layer, the second layer comprising the elements of Cr, Zn, and R, where R is an element selected from the group consisting of Te and Tl, wherein the ratio between Cr, Zn and R is (1-z-w) :z:w and wherein the values of z and w are within the ranges of 0.34<z<0.45 and 0.25<w<0.34;
wherein the first and second layers together exhibit ferromagnetic and piezoelectric properties.

23. The method of claim 22 further comprising the step of adding an element selected from the group consisting of S and Se into the first and second layers.

24. The method of claim 22 further comprising the step of adding S into the first and second layer by exposing the substrate surfaces to sulfur vapor prior to forming the first and second layers.

25. The method of claim 23 further comprising the step of adding the elements of Bi and O to the first and second layers.

26. The method of claim 25 wherein the step of adding the elements of Bi and O comprises immersing the composition of materials in a container holding liquid comprising Bi₂O₃ and water and applying a voltage between the composition of materials and the container.

27. The method of claim 26 wherein the weight percentage of Bi₂O₃ in the liquid is approximately between four and six percent.

28. The method of claim 27 further comprising the step of continuously stirring the liquid.

29. The method of claim 28 further comprising the step of heating the liquid.

30. The method of claim 29 further comprising the step of maintaining the liquid at substantially 97°C.

31. The method of claim 26 wherein the step of applying a voltage between the composition of materials and the liquid comprises applying a series of voltage pulses having triangular shapes between the composition of materials and the container.

32. The method of claim 31 wherein the pulses are applied for forty-five hours and the amplitude of each pulse being substantially two thousand volts.

33. The method of claim 32 wherein the duration of each pulse is essentially one second and the time interval between centers of two adjacent pulses is essentially six seconds.

34. The method of claim 31 wherein the step of applying a voltage between the composition of materials and the container further comprises alternatively applying positive and negative electrical potentials between the composition of materials and the container after applying the voltage pulses.

35. The method of claim 34 wherein, during an eight hour interval, the negative potential is substantially sixty volts and is applied continuously for substantially four hours, and the positive potential is also substantially sixty volts and is applied for substantially four hours.

36. The method of claim 35 wherein the step of applying a voltage between the composition of materials and the container is performed for substantially 28 days

37. The method of claim 25 wherein the value of x is within the range of 0.038 ≤ x ≤ 0.042.

38. The method of claim 37 wherein the value of y is within the range of 0.08 ≤ y ≤ 0.094.

39. The method of claim 38 wherein the value of z is within the range of 0.34 ≤ z ≤ 0.45.

40. The method of claim 39 wherein the value of w is within the range of 0.25 ≤ w ≤ 0.34.

41. The method of claim 38 wherein the value of (1-z-w) is within the range of 0.25 ≤ (1-z-w) ≤ 0.32.

42. The method of claim 25 wherein the value of x is substantially 0.04.

43. The method of claim 40 wherein the value of y is substantially 0.09.

44. The method of claim 41 wherein the value of z is substantially 0.4.

45. The method of claim 42 wherein the value of w is substantially 0.3.

46. A non-volatile, random-accessible memory device comprising at least one memory cell, said memory cell comprising:
a non-magnetizable substrate having first and second surfaces;
a first address line formed on the first surface of the non-magnetizable substrate;
a second address line formed on the second surface of the non-magnetizable substrate;
a first composition of materials formed on the first surface of the non-magnetizable substrate, the first composition of materials having ferromagnetic and piezoelectric properties and comprising the elements of Pb, Cd, Fe, Cr, Zn and an element selected from a group consisting of Te and Tl; and
a second composition of materials formed on the second surface of the non-magnetizable substrate, the second composition of materials having ferromagnetic and piezoelectric properties and comprising the elements of Pb, Cd, Fe, Cr, Zn and an element selected from a group consisting of Te and Tl.

47. The device of claim 46 wherein the second address line is substantially orthogonal to the first address line.

48. The device of claim 46 further comprising:
a first electrode formed on the first composition of materials; and
a second electrode formed on the second composition of materials.

49. The device of claim 46 wherein the first and second compositions of materials are substantially identical.

50. The device of claim 49 wherein the first and second compositions of materials comprise essentially two sequentially formed layers.

51. The device of claim 46 wherein the first and the second compositions of materials comprise a first layer of material formed on the substrate and a second layer of material formed on the first layer, the first layer of material comprising the elements of Pb, Cd, and Fe, wherein the ratio between Pb, Cd, and Fe in the first layer is (1-x-y):x:y where the values of x and y are within the ranges of 0.038<x<0.042 and 0.080<y<0.094, and the second layer of material comprising elements of Cr, Zn, and R where R is an element selected from the group consisting of Te and Tl, wherein the ratio between Cr, Zn and R in the second layer is (1-z-w) :z:w where the values of z and w are within the ranges of 0.34<z<0.45 and 0.25<w<0.34.

52. The device of claim 51 wherein the first and second layers further comprises an element selected from the group consisting of S and Se.

53. The device of claim 52 wherein the first and second layers further comprise the element O.

54. The device of claim 53 wherein the first and second layers further comprise the element Bi.

55. The device of claim 54 wherein z, w, and (1-z-w) are values within the ranges of 0.38 ≤ z ≤ 0.41, 0.28 ≤ w ≤ 0.31, and 0.25 ≤ (1-z-w) ≤ 0.32.

56. The device of claim 55 wherein the value of x is substantially 0.04, the value of y is substantially 0.09, the value of z is substantially 0.40, and the value of w is substantially 0.30.

57. The device of claim 51 wherein the substrate is a silicon substrate.

58. The device of claim 51 wherein the first and second address lines are made of a conductive material.

59. The device of claim 58 wherein the conductive material comprises silver.

60. The device of claim 58 wherein the address lines are metal strips substantially 1µm wide and substantially 1µm thick.

61. The device of claim 51 wherein each address line has a thickness that is greater than the thickness of the first layer of material.

62. A method of manufacturing a non-volatile, random-accessible memory device comprising the steps of:
forming a first address line on a first surface of a non-magnetizable substrate;
forming a second address line on a second surface of the non-magnetizable substrate;
forming a first composition of materials on the first surface of the non-magnetizable substrate, the first composition of materials having ferromagnetic and piezoelectric properties;
forming a second composition of materials on the second surface of the non-magnetizable substrate, the second composition of materials having ferromagnetic and piezoelectric properties.

63. The method of claim 62 further comprising a step of polishing the outermost surfaces of the first and second compositions of materials until the surfaces become substantially planar.

64. The method of claim 63 further comprising the steps of:
forming a first electrode on the first composition of materials; and
forming a second electrode on the second composition of materials.

65. The method of claim 62 wherein the second address line is substantially orthogonal to the first address line.

66. The method of claim 62 wherein the first layer of material comprises the elements of Pb, Cd, and Fe, wherein the ratio between Pb, Cd, and Fe is (1-x-y) :x:y where the values of x and y are within the ranges of 0.038<x<0.042 and 0.080<y<0.094; and
wherein the second layer of material comprises elements of Cr, Zn, and R where R is an element selected from the group consisting of Te and Tl, wherein the ratio between Cr, Zn and R is (1-z-w):z:w where the values of z and w are within the ranges of 0.34<z<0.45 and 0.25<w<0.34.

67. The method of claim 66 wherein the values of z, w and (1-z-w) are within the ranges of 0.38 ≤ z ≤ 0.41, 0.28 ≤ w ≤0.31, and 0.25 ≤ (1-z-w) ≤ 0.32.

68. The method of claim 67 wherein the value of x is substantially 0.04, the value of y is substantially 0.09, the value of z is substantially 0.40, and the value of w is substantially 0.30.

69. The method of claim 62 wherein the step of forming the address lines comprises depositing conductive layers onto the surfaces of the substrate and etching the conductive layers.

70. A method of storing two independent bits of binary data in a single storage cell of a non-volatile, random accessible memory comprising a non-magnetizable substrate and a composition of materials having ferromagnetic and piezoelectric properties and comprising the elements of Pb, Cd, Fe, Cr, Zn, Te, S and O, each such cell being addressable by a first and a second address line, comprising the steps of:
applying two electrical currents having the same polarities to the first and second address lines, respectively, for storing a first bit of binary data in the storage cell; and
applying two electrical currents having opposite polarities to the first and second address lines, respectively, for storing a second bit of data in the storage cell.

71. The method of claim 70 wherein the currents applied for storing the first bit of data have essentially identical amplitudes.

72. The method of claim 71 wherein the currents applied for storing the second bit of data have essentially identical amplitudes.

73. The method of claim 72 wherein the amplitudes of the electrical currents applied for storing the first and the second bits of data are such that a single current is not sufficient to change the binary value of the stored data.

74. The method of claim 73 wherein the first and second address lines are approximately 1 µm wide and 1 µm thick and are spaced apart by approximately 4.75 µm, and wherein the amplitude of each current applied for storing the first bit of binary data is substantially 5.0 µA.

75. The method of claim 74 wherein the amplitude of each current applied for storing the second bit of binary data is substantially 5.0µA.

76. The method of claim 70 further comprising the step of detecting a piezoelectric voltage induced in the storage cell, the piezoelectric voltage indicating that a binary data has been stored in the cell.

77. The method of claim 70 wherein the step of applying two electrical currents for storing the first bit of data includes storing a first binary value by applying two electrical currents both having a first polarity and same amplitude to the first and second address lines, respectively, and storing a second binary value by applying two electrical currents having a second polarity which is opposite to the first polarity and same amplitude to the first and second address lines, respectively.

78. The method of claim 77 wherein the two electrical currents for storing the first bit of data are applied as two synchronized electrical current pulses.

79. The method of claim 70 wherein the step of applying two electrical currents for storing the second bit of data includes storing a first binary value by applying two electrical currents having a first and second polarities and the same amplitude to the first and second address lines, respectively, and storing a second binary value by applying two electrical currents having the second and first polarities and same amplitudes to the first and second address lines, respectively.

80. The method of claim 79 wherein the two electrical currents for storing the second bit of data are applied as two synchronized electrical current pulses.

81. A method of non-destructively retrieving first and second independent bits of binary data stored in a single storage cell of a non-volatile, random-accessible memory comprising a non-magnetizable substrate and a composition of materials having ferromagnetic and piezoelectric properties and comprising the elements of Pb, Cd, Fe, Cr, Zn, Te, S, and O, each such cell being addressable by a first and a second address line, comprising the steps of:
applying two electrical currents having the same polarity to the first and second address lines, respectively, for retrieving the first bit of data, wherein the amplitudes of the currents are substantially the same and the combined amplitudes of the currents are insufficient for changing the binary value of the stored data; and
applying two electrical currents having opposite polarities to the first and second address lines, respectively, for retrieving the second bit of data, wherein the amplitudes of the currents are substantially the same and the combined amplitudes of the currents are insufficient for changing the binary value of the stored data.

82. The method of claim 81 further comprising the step of sensing a piezoelectric voltage generated in the storage cell in response to the applied currents.

83. The method of claim 82 wherein the first and second address lines are approximately 1 µm wide and 1 µm thick and are spaced apart by approximately 4.75 µm, and wherein the amplitudes of the two electrical currents applied for retrieving the first or the second bits of data are substantially 3.33 µA.

84. The method of claim 81 wherein the two electrical currents are applied for retrieving the first bit of data as two synchronized electrical current pulses having the same amplitudes and polarities.

85. The method of claim 84 wherein the two electrical currents are applied for retrieving the second bit of data as two synchronized electrical current pulses having the same amplitudes and opposite polarities.

86. A method of destructively retrieving first and second independent bits of binary data stored in a single storage cell of a non-volatile, random-accessible memory comprising a non-magnetizable substrate and a composition of materials having ferromagnetic and piezoelectric properties and comprising the elements of Pb, Cd, Fe, Cr, Zn, Te; S, and O, each such cell being addressable by a first and a second address line, comprising the steps of:
applying two electrical currents having a first polarity to the first and second address lines, respectively, for retrieving the first bit of data, wherein the amplitudes of the currents are substantially the same and the combined amplitudes of the currents are sufficient for changing a binary value stored in the first bit of binary data to a first binary value, and sensing a first piezoelectric voltage; and
applying two electrical currents, one having a first polarity to the first address line, and the other having a second polarity which is opposite to the first polarity to the second address line, respectively, for retrieving the second bit of data, wherein the amplitudes of the currents are substantially the same and the combined amplitudes of the currents are sufficient for changing a binary value stored in the second bit of binary data to a first binary value, and sensing a second piezoelectric voltage.

87. The method of claim 86 wherein the first piezoelectric voltage has a non-zero value, indicating the first bit of data having a second binary value; and
wherein the second piezoelectric voltage has a non-zero value, indicating the second bit of data having a second binary value.

88. The method of claim 87 wherein the amplitudes of the two electrical currents applied for retrieving the first or the second bits of data are substantially 5.0µA.

89. The method of claim 86 wherein the two electrical currents are applied for retrieving the first bit of data as two synchronized electrical current pulses having the same amplitudes and polarities.

90. The method of claim 89 wherein the two electrical currents are applied for retrieving the second bit of data as two synchronized electrical current pulses having the same amplitudes and opposite polarities.

## Patentansprüche

1. Substrat mit einer ersten Materialschicht und einer zweiten Materialschicht, die beide darauf abgeschieden sind, wobei
die erste Materialschicht die Elemente Pb, Cd und Fe umfasst, wobei das Verhältnis zwischen Pb, Cd und Fe in der ersten Schicht (1-x-y) :x:y ist, wobei die Werte von x und y in den Bereichen 0,038 < x < 0,042 und 0,080 < y < 0,094 liegen; und
die zweite Materialschicht auf der ersten Schicht gebildet ist, wobei die zweite Materialschicht die Elemente Cr, Zn und R umfasst, wobei R ein Element ist, das aus der aus Te und Tl bestehenden Gruppe ausgewählt ist, wobei das Verhältnis zwischen Cr, Zn und R in der zweiten Schicht (1-x-w):z:w ist, wobei die Werte von z und w in den Bereichen 0,34 < z < 0,45 und 0,25 < w < 0,34 liegen;
wobei die erste und die zweite Schicht zusammen ferromagnetische und piezoelektrische Eigenschaften zeigen.

2. Substrat nach Anspruch 1, bei dem die erste Schicht des weiteren ein Element umfasst, das aus der aus S und Se bestehenden Gruppe ausgewählt ist.

3. Substrat nach Anspruch 1, bei dem die erste Schicht des weiteren das Element S umfasst, und zumindest Anteile von Pb und Fe mit S gebunden sind, um PbS und FeS zu bilden.

4. Substrat nach Anspruch 2, bei dem die erste Schicht des weiteren das Element O umfasst, und zumindest ein Anteil von Fe mit O gebunden ist, um Fe₂O₃ zu bilden.

5. Substrat nach Anspruch 4, bei dem die erste Schicht des weiteren das Element Bi umfasst.

6. Substrat nach Anspruch 2, bei dem der Wert von x im wesentlichen 0,04 beträgt.

7. Substrat nach Anspruch 6, bei dem der Wert von y im wesentlichen 0,09 beträgt.

8. Substrat nach Anspruch 1, bei dem die zweite Schicht die Elemente Cr, Zn und Te umfasst.

9. Substrat nach Anspruch 1, bei dem die zweite Schicht des weiteren ein Element umfasst, das aus der aus S und Se bestehenden Gruppe ausgewählt ist.

10. Substrat nach Anspruch 1, bei dem die zweite Schicht des weiteren das Element S umfasst, und zumindest ein Anteil von Zn mit S gebunden ist, um ZnS zu bilden.

11. Substrat nach Anspruch 9, bei dem die zweite Schicht des weiteren das Element O umfasst.

12. Substrat nach Anspruch 11, bei dem die zweite Schicht des weiteren das Element Bi umfasst.

13. Substrat nach Anspruch 9, bei dem der Wert von (1-z-w) in dem Bereich 0,25 ≤ (1-z-w) ≤ 0,32 liegt.

14. Substrat nach Anspruch 13, bei dem der Wert von z in dem Bereich 0,38 ≤ z ≤ 0,41 liegt.

15. Substrat nach Anspruch 14, bei dem der Wert von w in dem Bereich 0,28 ≤ w ≤ 0,31 liegt.

16. Substrat nach Anspruch 9, bei dem der Wert von z im wesentlichen 0,4 beträgt.

17. Substrat nach Anspruch 16, bei dem der Wert von w im wesentlichen 0,3 beträgt.

18. Substrat nach Anspruch 1, bei dem die erste Schicht im wesentlichen 0,7 µm stark ist.

19. Substrat nach Anspruch 18, bei dem die zweite Schicht im wesentlichen 0,7 µm stark ist.

20. Materialzusammensetzung, die sowohl ferromagnetische als auch piezoelektrische Eigenschaften zeigt, mit
einer ersten Materialschicht, die die Elemente Pb, Cd, Fe, S und O umfasst, wobei das Verhältnis zwischen Pb, Cd und Fe (1-x-y) :x:y ist, und die Werte von x und y in den Bereichen 0,038 ≤ x ≤ 0,042 und 0,080 ≤ y ≤ 0,094 liegen, wobei die erste Schicht mit S und O gesättigt ist, und wobei zumindest Anteile von Pb und Fe mit S gebunden sind, um PbS und FeS zu bilden, und zumindest einen Anteil von Fe mit O gebunden ist, um Fe₂O₃ zu bilden; und
einer zweiten Materialschicht, die auf der ersten Schicht gebildet ist, wobei die zweite Materialschicht die Elemente Cr, Zn, Te, S und O umfasst, wobei das Verhältnis zwischen Cr, Zn und Te (1-z-w) :z:w ist, und der Wert von (1-z-w), z und w in den Bereichen 0,25 ≤ (1-z-w) ≤ 0,32, 0,38 ≤ z ≤ 0,41 und 0,28 ≤ w ≤ 0,31 liegen, wobei die zweite Schicht mit S und O gesättigt ist, und wobei zumindest ein Anteil von Zn mit S gebunden ist, um ZnS zu bilden.

21. Zusammensetzung nach Anspruch 20, bei der die erste und die zweite Schicht des weiteren das Element Bi umfassen.

22. Verfahren zum Herstellen eines Substrats mit einer ersten Materialschicht und einer zweiten Materialschicht, die beide darauf abgeschieden sind, wobei das Verfahren die folgenden Schritte umfasst:
Bilden der ersten Materialschicht auf einem Substrat, wobei die erste Schicht die Elemente Pb, Cd und Fe umfasst, wobei das Verhältnis zwischen Pb, Cd und Fe (1-x-y) :x:y ist, und wobei die Werte von x und y in den Bereichen 0,038 < x < 0,042 und 0,080 < y < 0,094 liegen; und
Bilden der zweiten Materialschicht auf der ersten Schicht, wobei die zweite Schicht die Elemente Cr, Zn und R umfasst, wobei R ein Element ist, das aus der aus Te und Tl bestehenden Gruppe ausgewählt ist, wobei das Verhältnis zwischen Cr und Zn und R (1-z-w) :z:w ist, und wobei die Werte von z und w in den Bereichen 0,34 < z < 0,45 und 0,25 < w < 0,34 liegen;
wobei die erste und die zweite Schicht zusammen ferromagnetische und piezoelektrische Eigenschaften zeigen.

23. Verfahren nach Anspruch 22, des weiteren mit dem Schritt des Hinzufügens eines Elements in die erste und die zweite Schicht, das aus der aus S und Se bestehenden Gruppe ausgewählt ist.

24. Verfahren nach Anspruch 22, des weiteren mit dem Schritt des Zufügens von S in die erste und die zweite Schicht, indem die Substratoberflächen Schwefeldampf ausgesetzt werden, bevor die erste und die zweite Schicht gebildet werden.

25. Verfahren nach Anspruch 23, des weiteren mit dem Schritt des Zufügens der Elemente Bi und O zu der ersten und der zweiten Schicht.

26. Verfahren nach Anspruch 25, bei dem der Schritt des Hinzufügens der Elemente Bi und O das Eintauchen der Materialzusammensetzung in einen Behälter, der eine Flüssigkeit mit Bi₂O₃ und Wasser enthält, und das Anlegen einer Spannung zwischen der Materialzusammensetzung und dem Behälter umfasst.

27. Verfahren nach Anspruch 26, bei dem der Gewichtsprozentsatz von Bi₂O₃ in der Flüssigkeit ungefähr zwischen vier und sechs Prozent liegt.

28. Verfahren nach Anspruch 27, des weiteren mit dem Schritt des andauernden Rührens der Flüssigkeit.

29. Verfahren nach Anspruch 28, des weiteren mit dem Schritt des Erwärmens der Flüssigkeit.

30. Verfahren nach Anspruch 29, des weiteren mit dem Schritt des Haltens der Flüssigkeit auf im wesentlichen 97°C.

31. Verfahren nach Anspruch 26, bei dem der Schritt des Anlegens einer Spannung zwischen die Materialzusammensetzung und die Flüssigkeit das Anlegen einer Spannungspulsreihe mit Dreiecksformen zwischen der Materialzusammensetzung und dem Behälter umfasst.

32. Verfahren nach Anspruch 31, bei dem die Pulse für 45 Stunden angelegt werden, und die Amplitude von jedem Puls im wesentlichen zweitausend Volt beträgt.

33. Verfahren nach Anspruch 32, bei dem die Dauer von jedem Puls im wesentlichen eine Sekunde und der Zeitabstand zwischen den Mitten von zwei benachbarten Pulsen im wesentlichen sechs Sekunden beträgt.

34. Verfahren nach Anspruch 31, bei dem der Schritt des Anlegens einer Spannung zwischen der Materialzusammensetzung und dem Behälter des weiteren das abwechselnde Anlegen positiver und negativer elektrischer Potentiale zwischen der Materialzusammensetzung und dem Behälter nach dem Anlegen der Spannungspulse umfasst.

35. Verfahren nach Anspruch 34, bei dem während einem Intervall von acht Stunden das negative Potential im wesentlichen sechzig Volt beträgt und andauernd für im wesentlichen vier Stunden angelegt wird, und das positive Potential auch im wesentlichen sechzig Volt beträgt und für im wesentlichen vier Stunden angelegt wird.

36. Verfahren nach Anspruch 35, bei dem der Schritt des Anlegens einer Spannung zwischen der Materialzusammensetzung und dem Behälter für im wesentlichen 28 Tage durchgeführt wird.

37. Verfahren nach Anspruch 25, bei dem der Wert von x in dem Bereich 0,038 ≤ x ≤ 0,042 liegt.

38. Verfahren nach Anspruch 37, bei dem der Wert von y in dem Bereich 0,08 ≤ y ≤ 0,094 liegt.

39. Verfahren nach Anspruch 38, bei dem der Wert von z in dem Bereich 0,34 ≤ z ≤ 0,45 liegt.

40. Verfahren nach Anspruch 39, bei dem der Wert von w in dem Bereich 0,25 ≤ w ≤ 0,34 liegt.

41. Verfahren nach Anspruch 38, bei dem der Wert von (1-z-w) in dem Bereich 0,25 ≤ (1-z-w) ≤ 0,32 liegt.

42. Verfahren nach Anspruch 25, bei dem der Wert von x im wesentlichen 0,04 beträgt.

43. Verfahren nach Anspruch 40, bei dem der Wert von y im wesentlichen 0,09 beträgt.

44. Verfahren nach Anspruch 41, bei dem der Wert von z im wesentlichen 0,4 beträgt.

45. Verfahren nach Anspruch 42, bei dem der Wert von w im wesentlichen 0,3 beträgt.

46. Vorrichtung für einen nicht flüchtigen, zufällig zugreifbaren Speicher mit zumindest einer Speicherzelle, wobei die Speicherzelle
ein nicht magnetisierbares Substrat mit einer ersten und einer zweiten Oberfläche;
eine erste Adressleitung, die auf der ersten Oberfläche des nicht magnetisierbaren Substrats gebildet ist;
eine zweite Adressleitung, die auf der zweiten Oberfläche des nicht magnetisierbaren Substrats gebildet ist;
eine erste Materialzusammensetzung, die auf der ersten Oberfläche des nicht magnetisierbaren Substrats gebildet ist, wobei die erste Materialzusammensetzung ferromagnetische und piezoelektrische Eigenschaften aufweist und die Elemente Pb, Cd, Fe, Cr, Zn und ein Element, das aus einer aus Te und Tl bestehenden Gruppe ausgewählt ist, umfasst, und
eine zweite Materialzusammensetzung aufweist, die auf der zweiten Oberfläche des nicht magnetisierbaren Substrats gebildet ist, wobei die zweite Materialzusammensetzung ferromagnetische und piezoelektrische Eigenschaften aufweist und die Elemente Pb, Cd, Fe, Cr, Zn und ein Element umfasst, das aus einer aus Te und Tl bestehenden Gruppe ausgewählt ist.

47. Vorrichtung nach Anspruch 46, bei der die zweite Adressleitung im wesentlichen orthogonal zu der ersten Adressleitung liegt.

48. Vorrichtung nach Anspruch 46, des weiteren mit
einer ersten Elektrode, die auf der ersten Materialzusammensetzung gebildet ist; und
einer zweiten Elektrode, die auf der zweiten Materialzusammensetzung gebildet ist.

49. Vorrichtung nach Anspruch 46, bei der die erste und die zweite Materialzusammensetzung im wesentlichen identisch sind.

50. Vorrichtung nach Anspruch 49, bei der die erste und die zweite Materialzusammensetzung im wesentlichen zwei nacheinander gebildete Schichten umfassen.

51. Vorrichtung nach Anspruch 46, bei der die erste und die zweite Materialzusammensetzung eine erste Materialschicht, die auf dem Substrat gebildet ist, und eine zweite Materialschicht umfassen, die auf der ersten Schicht gebildet ist, wobei die erste Materialschicht die Elemente Pb, Cd und Fe umfasst, wobei das Verhältnis zwischen Pb, Cd und Fe in der ersten Schicht (1-x-y):x:y ist, wobei die Werte von x und y in den Bereichen 0,038 < x < 0,042 und 0,080 < y < 0,094 liegen, und die zweite Materialschicht die Elemente Cr, Zn und R umfasst, wobei R ein Element ist, das aus der aus Te und Tl bestehenden Gruppe ausgewählt ist, wobei das Verhältnis zwischen Cr, Zn und R in der zweiten Schicht (1-z-w) :z:w ist, wobei die Werte von z und w in den Bereichen 0,34 < z < 0,45 und 0,25 < w < 0,34 liegen.

52. Vorrichtung nach Anspruch 51, bei der die erste und die zweite Schicht des weiteren ein Element umfasst, das aus der aus S und Se bestehenden Gruppe ausgewählt ist.

53. Vorrichtung nach Anspruch 52, bei der die erste und die zweite Schicht des weiteren das Element O umfassen.

54. Vorrichtung nach Anspruch 53, bei der die erste und die zweite Schicht des weiteren das Element Bi umfassen.

55. Vorrichtung nach Anspruch 54, bei der z, w und (1-z-w) Werte in den Bereichen 0,38 ≤ z ≤ 0,41, 0,28 ≤ w ≤ 0,31 und 0,25 ≤ (1-z-w) ≤ 0,32 haben.

56. Vorrichtung nach Anspruch 55, bei der der Wert von x im wesentlichen 0,04 beträgt, der Wert von y im wesentlichen 0,09 beträgt, der Wert von z im wesentlichen 0,40 beträgt, und der Wert von w im wesentlichen 0,30 beträgt.

57. Vorrichtung nach Anspruch 51, bei der das Substrat ein Silizium-Substrat ist.

58. Vorrichtung nach Anspruch 51, bei der die erste und die zweite Adressleitung aus einem leitfähigen Material gebildet sind.

59. Vorrichtung nach Anspruch 58, bei der das leitfähige Material Silber umfasst.

60. Vorrichtung nach Anspruch 58, bei der die Adressleitungen Metallstreifen mit im wesentlichen 1 µm Breite und im wesentlichen 1 µm Dicke sind.

61. Vorrichtung nach Anspruch 51, bei der jede Adressleitung eine Dicke aufweist, die größer als die Dicke der ersten Materialschicht ist.

62. Verfahren zum Herstellen einer Vorrichtung für einen nicht flüchtigen, zufällig zugreifbaren Speicher mit den folgenden Schritten:
Bilden einer ersten Adressleitung auf einer ersten Oberfläche eines nicht magnetisierbaren Substrats;
Bilden einer zweiten Adressleitung auf einer zweiten Oberfläche des nicht magnetisierbaren Substrats;
Bilden einer ersten Materialzusammensetzung auf der ersten Oberfläche des nicht magnetisierbaren Substrats, wobei die erste Materialzusammensetzung ferromagnetische und piezoelektrische Eigenschaften aufweist;
Bilden einer zweiten Materialzusammensetzung auf der zweiten Oberfläche des nicht magnetisierbaren Substrats, wobei die zweite Materialzusammensetzung ferromagnetische und piezoelektrische Eigenschaften aufweist.

63. Verfahren nach Anspruch 62, des weiteren mit einem Schritt des Polierens der äußersten Oberflächen der ersten und der zweiten Materialzusammensetzung, bis die Oberflächen im wesentlichen planar werden.

64. Verfahren nach Anspruch 63, des weiteren mit den folgenden Schritten:
Bilden einer ersten Elektrode auf der ersten Materialzusammensetzung; und
Bilden einer zweiten Elektrode auf der zweiten Materialzusammensetzung.

65. Verfahren nach Anspruch 62, bei dem die zweite Adressleitung im wesentlichen orthogonal zu der ersten Adressleitung liegt.

66. Verfahren nach Anspruch 62, bei dem die erste Materialschicht die Elemente Pb, Cd und Fe umfasst, wobei das Verhältnis zwischen Pb, Cd und Fe (1-x-y) :x:y ist, wobei die Werte von x und y in den Bereichen 0,038 < x < 0,042 und 0,080 < y < 0,094 liegen; und
wobei die zweite Materialschicht die Elemente Cr, Zn und R umfasst, wobei R ein Element ist, das aus der aus Te und Tl bestehenden Gruppe ausgewählt ist, wobei das Verhältnis zwischen Cr, Zn und R (1-z-w) :z:w ist, wobei die Werte von z und w in den Bereichen 0,34 < z < 0,45 und 0,25 < w < 0,34 liegen.

67. Verfahren nach Anspruch 66, bei dem die Werte von z, w und (1-z-w) in den Bereichen 0,38 ≤ z ≤ 0,41, 0,28 ≤ w ≤ 0,31 und 0,25 ≤ (1-z-w) ≤ 0,32 liegen.

68. Verfahren nach Anspruch 67, bei dem der Wert von x im wesentlichen 0,04 beträgt, der Wert von y im wesentlichen 0,09 beträgt, der Wert von z im wesentlichen 0,40 beträgt, und der Wert von w im wesentlichen 0,30 beträgt.

69. Verfahren nach Anspruch 62, bei dem der Schritt des Bildens der Adressleitungen das Abscheiden leitfähiger Schichten auf den Oberflächen des Substrats und das Ätzen der leitfähigen Schichten umfasst.

70. Verfahren zum Speichern von zwei unabhängigen binären Datenbits in einer einzigen Speicherzelle eines nicht flüchtigen, zufällig zugreifbaren Speichers mit einem nicht magnetisierbaren Substrat und einer Materialzusammensetzung mit ferromagnetischen und piezoelektrischen Eigenschaften und mit den Elementen Pb, Cd, Fe, Cr, Zn, Te, S und O, wobei jede derartige Zelle durch eine erste und eine zweite Adressleitung adressierbar ist, mit den folgenden Schritten:
Leiten von zwei elektrischen Strömen mit der gleichen Polarität durch die erste bzw. die zweite Adressleitung zum Speichern eines ersten binären Daten Bits in der Speicherzelle; und
Leiten von zwei elektrischen Strömen entgegengesetzter Polarität durch die erste bzw. die zweite Adressleitung zum Speichern eines zweiten binären Datenbits in der Speicherzelle.

71. Verfahren nach Anspruch 70, bei dem die zum Speichern des ersten Datenbits verwendeten Ströme im wesentlichen identische Amplituden aufweisen.

72. Verfahren nach Anspruch 71, bei dem die zum Speichern des zweiten Datenbits verwendeten Ströme im wesentlichen identische Amplituden aufweisen.

73. Verfahren nach Anspruch 72, bei dem die Amplituden der zum Speichern des ersten und des zweiten Datenbits verwendeten Ströme derart sind, daß ein einzelner Strom nicht ausreicht, um den binären Wert der gespeicherten Daten zu ändern.

74. Verfahren nach Anspruch 73, bei dem die erste und die zweite Adressleitung ungefähr 1µm breit und 1 µm dick sind, und ungefähr 4,75 µm beabstandet sind, und bei dem die Amplitude von jedem Strom, der zum Speichern des ersten binären Datenbits verwendet wird, im wesentlichen 5,0 µA beträgt.

75. Verfahren nach Anspruch 74, bei dem die Amplitude von jedem zum Speichern des binären Datenbits verwendeten Stroms im wesentlichen 5,0 µA beträgt.

76. Verfahren nach Anspruch 70, des weiteren mit dem Schritt des Detektieren einer piezoelektrischen Spannung, die in der Speicherzelle induziert ist, wobei die piezoelektrische Spannung anzeigt, daß binäre Daten in der Zelle gespeichert wurden.

77. Verfahren nach Anspruch 70, bei dem der Schritt des Verwendens von zwei elektrischen Strömen zum Speichern des ersten Datenbits das Speichern eines ersten binären Werts, indem zwei elektrische Ströme durch die erste bzw. die zweite Adressleitung geleitet werden, die beide eine erste Polarität und die gleiche Amplitude aufweisen, und das Speichern eines zweiten binären Werts umfasst, indem zwei elektrische Ströme durch die erste bzw. zweite Adressleitung geleitet werden, die eine zweite Polarität, die zu der ersten Polarität entgegengesetzt ist, und die gleiche Amplitude aufweisen.

78. Verfahren nach Anspruch 77, bei dem die beiden elektrischen Ströme zum Speichern des ersten Datenbits als zwei synchronisierte elektrische Strompulse verwendet werden.

79. Verfahren nach Anspruch 70, bei dem der Schritt des Verwendens von zwei elektrischen Strömen zum Speichern des zweiten Datenbits das Speichern eines ersten Binärwerts, indem zwei elektrische Ströme mit einer ersten und einer zweiten Polarität und der gleichen Amplitude durch die erste bzw. die zweite Adressleitung geleitet werden, und das Speichern eines zweiten Binärwerts umfasst, indem zwei elektrische Ströme mit der zweiten und der ersten Polarität und gleichen Amplituden durch die erste bzw. die zweite Adressleitung geleitet werden.

80. Verfahren nach Anspruch 79, bei dem die beiden elektrischen Ströme zum Speichern des zweiten Datenbits als zwei synchronisierte elektrische Strompulse verwendet werden.

81. Verfahren zum nicht löschenden Wiedergewinnen eines ersten und eines zweiten unabhängigen binären Datenbits, die in einer einzigen Speicherzelle eines nicht flüchtigen, zufällig zugreifbaren Speichers mit einem nicht magnetisierbaren Substrat und einer Materialzusammensetzung gespeichert sind, die ferromagnetische und piezoelektrische Eigenschaften aufweist und die Elemente Pb, Cd, Fe, Cr, Zn, Te, S und O umfasst, wobei jede derartige Zelle durch eine erste und eine zweite Adressleitung adressierbar ist, mit den folgenden Schritten:
Leiten von zwei elektrischen Strömen mit der gleichen Polarität durch die erste bzw. die zweite Adressleitung zum Wiedergewinnen des ersten Datenbits, wobei die Amplituden der Ströme im wesentlichen die gleichen sind, und die kombinierten Amplituden der Ströme nicht hinreichend sind, um den binären Wert der gespeicherten Daten zu ändern; und
Leiten von zwei elektrischen Strömen entgegengesetzter Polarität durch die erste bzw. die zweite Adressleitung zum Wiedergewinnen des zweiten Datenbits, wobei die Amplituden der Ströme im wesentlichen gleich sind, und die kombinierten Amplituden der Ströme nicht hinreichend sind, um den binären Wert der gespeicherten Daten zu ändern.

82. Verfahren nach Anspruch 81, des weiteren mit dem Schritt des Messens einer piezoelektrischen Spannung, die in der Speicherzelle als Reaktion auf die verwendeten Ströme erzeugt wird.

83. Verfahren nach Anspruch 82, bei dem die erste und die zweite Adressleitung ungefähr 1µm breit und 1µm dick sind und ungefähr 4,75µm beabstandet sind, und bei dem die Amplituden der beiden elektrischen Ströme, die zum Wiedergewinnen des ersten oder des zweiten Datenbits verwendet werden, im wesentlichen 3,33 µA betragen.

84. Verfahren nach Anspruch 81, bei dem die beiden elektrischen Ströme zum Wiedergewinnen des ersten Datenbits als zwei sekundäre elektrische Strompulse mit der gleichen Amplitude und Polarität verwendet werden.

85. Verfahren nach Anspruch 84, bei dem die beiden elektrischen Ströme zum Wiedergewinnen des zweiten Datenbits als zwei synchronisierte elektrische Strompulse mit der gleichen Amplitude und entgegengesetzter Polarität verwendet werden.

86. Verfahren zum löschenden Wiedergewinnen eines ersten und eines zweiten unabhängigen binären Datenbits, die in einer einzigen Speicherzelle eines nicht flüchtigen, zufällig zugreifbaren Speichers mit einem nicht magnetisierbaren Substrat und einer Materialzusammensetzung gespeichert sind, die ferromagnetische und piezoelektrische Eigenschaften aufweist, und die Elemente Pb, Cd, Fe, Cr, Zn, Te, S und O umfasst, wobei jede derartige Zelle durch eine erste und eine zweite Adressleitung adressierbar ist, mit den folgenden Schritten:
Leiten von zwei elektrischen Strömen mit einer ersten Polarität durch die erste bzw. die zweite Adressleitung zum Wiedergewinnen des ersten Datenbits, wobei die Amplituden der Ströme im wesentlichen gleich sind, und die kombinierten Amplituden der Ströme hinreichend sind, um einen Binärwert, der in dem ersten binären Datenbit gespeichert ist, in einen ersten Binärwert zu ändern, und Messen einer ersten piezoelektrischen Spannung; und
Leiten von zwei elektrischen Strömen, einen mit einer ersten Polarität durch eine erste Adressleitung bzw. den anderen mit einer zweiten Polarität, die zu der ersten Polarität entgegengesetzt ist, durch die zweite Adressleitung, um das zweite Datenbit wiederzugewinnen, wobei die Amplituden der Ströme im wesentlichen gleich sind, und die kombinierten Amplituden der Ströme hinreichend sind, um einen Binärwert, der in dem zweiten binären Datenbit gespeichert ist, in einen ersten Binärwert zu ändern, und Messen einer zweiten piezoelektrischen Spannung.

87. Verfahren nach Anspruch 86, bei dem die erste piezoelektrische Spannung einen Wert ungleich Null aufweist, der auf das erste Datenbit mit einem zweiten Binärwert hinweist; und
wobei die zweite piezoelektrische Spannung einen Wert ungleich Null aufweist, der auf das zweite Datenbit mit einem zweiten Binärwert hinweist.

88. Verfahren nach Anspruch 87, bei dem die Amplituden der beiden elektrischen Ströme, die zum Wiedergewinnen des ersten oder zweiten Datenbits verwendet werden, im wesentlichen 5,0 µA betragen.

89. Verfahren nach Anspruch 86, bei dem die beiden elektrischen Ströme zum Wiedergewinnen des ersten Datenbits als zwei synchronisierte elektrische Strompulse mit der gleichen Amplitude und Polarität verwendet werden.

90. Verfahren nach Anspruch 89, bei dem die beiden elektrischen Ströme zum Wiedergewinnen des zweiten Datenbits als zwei synchronisierte elektrische Strompulse mit der gleichen Amplitude und entgegengesetzter Polarität verwendet werden.

## Revendications

1. Substrat comprenant une première couche de matériau et une seconde couche de matériau toutes deux disposés dessus, dans lequel :
la première couche de matériau comprend les éléments de Pb, Cd et Fe, dans laquelle le rapport entre Pb, Cd et Fe dans la première couche est (1-x-y):x:y où les valeurs de x et y se situent dans les plages de 0,038 < x < 0,042 et 0,080 < y < 0,094 ; et
la seconde couche de matériau formée sur la première couche, la seconde couche de matériau comprenant les éléments de Cr, Zn et R, où R est un élément sélectionné dans le groupe constitué de Te et Tl, dans laquelle le rapport entre Cr, Zn et R dans la seconde couche est (1-z-w):z:w où les valeurs de z et w se situent dans les plages de 0,34 < z < 0,45 et 0,25 < w < 0,34 ;
dans lequel les première et seconde couches ensemble révèlent des propriétés ferromagnétiques et piézo-électriques.

2. Substrat de la revendication 1, dans lequel la première couche comprend en outre un élément sélectionné dans le groupe constitué de S et Se.

3. Substrat de la revendication 1, dans lequel la première couche comprend en outre l'élément S, et au moins des portions de Pb et Fe se lient avec S pour former PbS et FeS.

4. Substrat de la revendication 2, dans lequel la première couche comprend en outre l'élément O, ou au moins une partie de Fe se lie avec O pour former Fe₂O₃.

5. Substrat de la revendication 4, dans lequel la première couche comprend en outre l'élément Bi.

6. Substrat de la revendication 2, dans lequel la valeur de x est sensiblement de 0,04.

7. Substrat de la revendication 6, dans lequel la valeur de y est sensiblement de 0,09.

8. Substrat de la revendication 1, dans lequel la seconde couche comprend les éléments de Cr, Zn et Te.

9. Substrat de la revendication 1, dans lequel la seconde couche comprend en outre un élément sélectionné dans le groupe constitué de S et Se.

10. Substrat de la revendication 1, dans lequel la seconde couche comprend en outre l'élément S, et au moins une portion de Zn se lie avec S pour former ZnS.

11. Substrat de la revendication 9, dans lequel la seconde couche comprend en outre l'élément O.

12. Substrat de la revendication 11, dans lequel la seconde couche comprend en outre l'élément Bi.

13. Substrat de la revendication 9, dans lequel la valeur de (1-z-w) se situe dans la plage de 0,25 ≤ (1-z-w) ≤ 0,32.

14. Substrat de la revendication 13, dans lequel la valeur de z se situe dans la plage de 0,38 ≤ z ≤ 0,41.

15. Substrat de la revendication 14, dans lequel la valeur de w se situe dans la plage de 0,28 ≤ w ≤ 0,31.

16. Substrat de la revendication 9, dans lequel la valeur de z est sensiblement de 0,4.

17. Substrat de la revendication 16, dans lequel la valeur de w est sensiblement de 0,3.

18. Substrat de la revendication 1, dans lequel la première couche a sensiblement 0,7 µm d'épaisseur.

19. Substrat de la revendication 18, dans lequel la seconde couche a sensiblement 0,7 µm d'épaisseur.

20. Composition de matériaux qui révèle à la fois des propriétés ferromagnétiques et piézo-électriques, comprenant :
une première couche de matériau comprenant les éléments de Pb, Cd, Fe, S et O dans laquelle le rapport entre Pb, Cd et Fe est (1-x-y):x:y et les valeurs de x et y se situent dans les plages de 0,038 ≤ x ≤ 0,042 et 0,080 ≤ y ≤ 0,094, dans laquelle la première couche est saturée en S et O, et dans laquelle au moins des portions de Pb et Fe se lient avec S pour former PbS et FeS et au moins une portion de Fe se lie avec O pour former Fe₂O₃ ; et
une seconde couche de matériau formée sur la première couche, la seconde couche de matériau comprenant les éléments de Cr, Zn, Te, S et O dans laquelle le rapport entre Cr, Zn et Te est (1-z-w):z:w et les valeurs de (1-z-w), z et w se situent dans les plages de 0,25 ≤ (1-z-w) ≤ 0,32, 0,38 ≤ z ≤ 0,41 et 0,28 ≤ w ≤ 0,31, dans laquelle la seconde couche est saturée en S et O, et dans laquelle au moins une portion de Zn se lie avec S pour former ZnS.

21. Composition de la revendication 20, dans laquelle les première et seconde couches comprennent en outre l'élément Bi.

22. Procédé de fabrication d'un substrat comprenant une première couche de matériau et une seconde couche de matériau toutes deux disposés là-dessus, dans lequel le procédé comprend les étapes consistant à :
former la première couche de matériau sur un substrat, la première couche comprenant les éléments de Pb, Cd et Fe, dans laquelle le rapport entre Pb, Cd et Fe est (1-x-y):x:y et dans laquelle les valeurs de x et y se situent dans les plages de 0,038 < x < 0,042 et 0,080 < y < 0,094 ; et
former la seconde couche de matériau sur la première couche, la seconde couche comprenant les éléments de Cr, Zn et R, où R est un élément sélectionné dans le groupe constitué de Te et Tl, dans laquelle le rapport entre Cr, Zn et R est (1-z-w):z:w et dans laquelle les valeurs de z et w se situent dans les plages de 0,34 < z < 0,45 et 0,25 < w < 0,34 ;
dans lequel les première et seconde couches ensemble révèlent des propriétés ferromagnétiques et piézo-électriques.

23. Procédé de la revendication 22, comprenant en outre l'étape consistant à ajouter un élément sélectionné provenant du groupe constitué de S et Se aux première et seconde couches.

24. Procédé de revendication 22, comprenant en outre l'étape consistant à ajouter S dans les première et seconde couches en exposant les surfaces du substrat à de la vapeur de soufre avant de former les première et seconde couches.

25. Procédé de la revendication 23, comprenant en outre l'étape consistant à ajouter les éléments Bi et O aux première et seconde couches.

26. Procédé de la revendication 25, dans lequel l'étape consistant à ajouter les éléments de Bi et O comprend l'immersion de la composition de matériaux dans un conteneur contenant du liquide comprenant du Bi₂O₃ et de l'eau et l'application d'une tension entre la composition de matériaux et le conteneur.

27. Procédé de la revendication 26, dans lequel le pourcentage en poids de Bi₂O₃ dans le liquide est approximativement entre quatre et six pour cent.

28. Procédé de la revendication 27, comprenant en outre l'étape consistant à remuer le liquide de manière continue.

29. Procédé de la revendication 28, comprenant en outre l'étape consistant à chauffer le liquide.

30. Procédé de la revendication 29, comprenant en outre l'étape consistant à maintenir le liquide à sensiblement 97°C.

31. Procédé de la revendication 26, dans lequel l'étape consistant à appliquer une tension entre la composition de matériaux et le liquide comprend l'application d'une série d'impulsions de tension ayant des formes triangulaires entre la composition de matériaux et le conteneur.

32. Procédé de la revendication 31, dans lequel les impulsions sont appliquées pendant quarante-huit heures et l'amplitude de chaque impulsion étant sensiblement de deux mille volts.

33. Procédé de la revendication 32, dans lequel la durée de chaque impulsion est essentiellement d'une seconde et l'intervalle de temps entre les centres de deux impulsions adjacentes est essentiellement de six secondes.

34. Procédé de la revendication 31, dans lequel l'étape consistant à appliquer une tension entre la composition de matériaux et le conteneur comprend en outre en variante l'application de potentiels électriques positifs et négatifs entre la composition de matériaux et le conteneur après application des impulsions de tension.

35. Procédé de la revendication 34, dans lequel, pendant un intervalle de huit heures, le potentiel négatif est sensiblement de soixante volts et est appliqué en continu pendant sensiblement quatre heures, et le potentiel positif est également sensiblement de soixante volts et est appliqué pendant sensiblement quatre heures.

36. Procédé de la revendication 35, dans lequel l'étape consistant à appliquer une tension entre la composition de matériaux et le conteneur est exécutée pendant sensiblement 28 jours.

37. Procédé de la revendication 25, dans lequel la valeur de x se situe dans la plage de 0,038 ≤ x ≤ 0,042.

38. Procédé de la revendication 37, dans lequel la valeur de y se situe dans la plage de 0,08 ≤ y ≤ 0,094.

39. Procédé de la revendication 38, dans lequel la valeur de z se situe dans la plage de 0,34 ≤ z ≤ 0,45.

40. Procédé de la revendication 39, dans lequel la valeur de w se situe dans la plage de 0,25 ≤ w ≤ 0,34.

41. Procédé de la revendication 38, dans lequel la valeur de (1-z-w) se situe dans la plage de 0,25 ≤ (1-z-w) ≤ 0,32.

42. Procédé de la revendication 25, dans lequel la valeur de x est sensiblement de 0,04.

43. Procédé de la revendication 40, dans lequel la valeur de y est sensiblement de 0,09.

44. Procédé de la revendication 41, dans lequel la valeur de z est sensiblement de 0,4.

45. Procédé de la revendication 42, dans lequel la valeur de w est sensiblement de 0,3.

46. Dispositif de mémoire à accès aléatoire, non volatile, comprenant au moins une cellule de stockage, ladite cellule de stockage comprenant :
un substrat non magnétisable ayant une première et une seconde surface ;
une première ligne d'adresse formée sur la première surface du substrat non magnétisable ;
une seconde ligne d'adresse formée sur la seconde surface du substrat non magnétisable ;
une première composition de matériaux formée sur la première surface du substrat non magnétisable, la première composition de matériaux ayant des propriétés ferromagnétiques et piézo-électriques et comprenant les éléments de Pb, Cd, Fe, Cr, Zn et un élément sélectionné dans un groupe constitué de Te et Tl ; et
une seconde composition de matériaux formée sur la seconde surface du substrat non magnétisable, la seconde composition de matériaux ayant des propriétés ferromagnétiques et piézo-électriques et comprenant les éléments de Pb, Cd, Fe, Cr, Zn et un élément sélectionné dans un groupe constitué de Te et Tl.

47. Dispositif de la revendication 46, dans lequel la seconde ligne d'adresse est sensiblement orthogonale par rapport à la première ligne d'adresse.

48. Dispositif de la revendication 46, comprenant en outre :
une première électrode formée sur la première composition de matériaux ; et
une seconde électrode formée sur la seconde composition de matériaux.

49. Dispositif de la revendication 46, dans lequel les première et seconde compositions de matériaux sont sensiblement identiques.

50. Dispositif de la revendication 46, dans lequel les première et seconde compositions de matériaux comprennent essentiellement deux couches formées séquentiellement.

51. Dispositif de la revendication 46, dans lequel les première et seconde compositions de matériaux comprennent une première couche de matériau formée sur le substrat et une seconde couche de matériau formée sur la première couche, la première couche comprenant les éléments de Pb, Cd et Fe, dans laquelle le rapport entre Pb, Cd et Fe dans la première couche est (1-x-y):x:y où les valeurs de x et y se situent dans les plages de 0,038 < x < 0,042 et 0,080 < y < 0,094 ; et la seconde couche de matériau comprenant les éléments de Cr, Zn et R, où R est un élément sélectionné dans le groupe constitué de Te et Tl, dans laquelle le rapport entre Cr, Zn et R dans la seconde couche est (1-z-w):z:w où les valeurs de z et w se situent dans les plages de 0,34 < z < 0,45 et 0,25 < w < 0,34.

52. Dispositif de la revendication 51, dans lequel les première et seconde couches comprennent en outre un élément sélectionné dans le groupe constitué de S et Se.

53. Dispositif de la revendication 52, dans lequel les première et seconde couches comprennent l'élément O.

54. Dispositif de la revendication 53, dans lequel les première et seconde couches comprennent l'élément Bi.

55. Dispositif de la revendication 54, dans lequel z, w et (1-z-w) se situent dans les plages de 0,38 ≤ z ≤ 0,41, 0,28 ≤ w ≤ 0,31, et 0,25 ≤ (1-z-w) ≤ 0,32.

56. Procédé de la revendication 55, dans lequel la valeur de x est sensiblement de 0,04, la valeur de y est sensiblement de 0,09, la valeur de z est sensiblement de 0,40 et la valeur de w est sensiblement de 0,30.

57. Dispositif de la revendication 51, dans lequel le substrat est un substrat de silicium.

58. Dispositif de la revendication 51, dans lequel les première et seconde lignes d'adresse sont faites d'un matériau conducteur.

59. Dispositif de la revendication 58, dans lequel le matériau conducteur comprend de l'argent.

60. Dispositif de la revendication 58, dans lequel les lignes d'adresse sont des bandes métalliques sensiblement de 1 µm de largeur et sensiblement de 1 µm d'épaisseur.

61. Dispositif de la revendication 51, dans lequel chaque ligne d'adresse a une épaisseur qui est supérieure à l'épaisseur de la première couche de matériau.

62. Procédé de fabrication d'un dispositif de mémoire à accès aléatoire, non volatile, comprenant les étapes consistant à :
former une première ligne d'adresse sur une première surface d'un substrat non magnétisable ;
former une seconde ligne d'adresse sur une seconde surface du substrat non magnétisable ;
former une première composition de matériaux sur la première surface du substrat non magnétisable, la première composition de matériaux ayant des propriétés ferromagnétiques et piézo-électriques ;
former une seconde composition de matériaux sur la seconde surface du substrat non magnétisable, la seconde composition de matériaux ayant des propriétés ferromagnétiques et piézo-électriques.

63. Procédé de la revendication 62, comprenant en outre une étape de polissage des surfaces extérieures des première et seconde compositions de matériaux jusqu'à ce que les surfaces deviennent sensiblement planes.

64. Procédé de la revendication 63, comprenant en outre les étapes consistant à :
former une première électrode sur la première composition de matériaux ; et
former une seconde électrode sur la seconde composition de matériaux.

65. Procédé de la revendication 62, dans lequel la seconde ligne d'adresse est sensiblement orthogonale par rapport à la première ligne d'adresse.

66. Procédé de la revendication 62, dans lequel la première couche de matériau comprend les éléments de Pb, Cd et Fe, dans lequel le rapport entre Pb, Cd et Fe est (1-x-y):x:y où les valeurs de x et y se situent dans les plages de 0,038 < x < 0,042 et 0,080 < y < 0,094 ; et
dans lequel la seconde couche de matériau comprend les éléments de Cr, Zn et R où R est un élément sélectionné dans le groupe constitué de Te et T1, dans laquelle le rapport entre Cr, Zn et R dans la seconde couche est (1-z-w):z:w où les valeurs de z et w se situent dans les plages de 0,34 < z < 0,45 et 0,25 < w < 0,34.

67. Procédé de la revendication 66, dans lequel les valeurs de z, w et (1-z-w) se situent dans les plages de 0,38 ≤ z ≤ 0,41, 0,28 ≤ w ≤ 0,31, et 0,25 ≤ (1-z-w) ≤ 0,32.

68. Procédé de la revendication 67, dans lequel la valeur de x est sensiblement de 0,04, la valeur de y est sensiblement de 0,09, la valeur de z est sensiblement de 0,40 et la valeur de w est sensiblement de 0,30.

69. Procédé de la revendication 62, dans lequel l'étape consistant à former les lignes d'adresse comprend la déposition de couches conductrices sur les surfaces du substrat et la gravure des couches conductrices.

70. Procédé d'enregistrement de deux bits indépendants de données binaires dans une seule cellule de stockage d'une mémoire à accès aléatoire, non volatile, comprenant un substrat non magnétisable et une composition de matériaux ayant des propriétés ferromagnétiques et piézo-électriques et comprenant les éléments de Pb, Cd, Fe, Cr, Zn, Te, S et O, chacune de ces cellules étant adressable par une première et seconde ligne d'adresse, comprenant les étapes consistant à :
appliquer deux courants électriques ayant les mêmes polarités sur les première et seconde lignes d'adresse, respectivement, pour enregistrer un premier bit de données binaires dans la cellule de stockage ; et
appliquer deux courants électriques ayant des polarités opposées sur les première et seconde lignes d'adresse, respectivement, pour enregistrer un second bit de données dans la cellule de stockage.

71. Procédé de la revendication 70, dans lequel les courants appliqués pour enregistrer le premier bit de données ont des amplitudes sensiblement identiques.

72. Procédé de la revendication 71, dans lequel les courants appliquer pour enregistrer le second bit de données ont des amplitudes essentiellement identiques.

73. Procédé de la revendication 72, dans lequel les amplitudes des courants électriques appliqués pour enregistrer les premier et second bits de données sont tels qu'un courant simple n'est pas suffisant pour modifier la valeur binaire des données enregistrées.

74. Procédé de la revendication 73, dans lequel les première et seconde lignes d'adresse ont approximativement 1 µm de largeur et 1 µm d'épaisseur et sont espacées d'approximativement 4,75 µm, et dans lequel l'amplitude de chaque courant appliqué pour enregistrer le premier bit de données binaires est sensiblement de 5,0 µA.

75. Procédé de la revendication 74, dans lequel l'amplitude de chaque courant appliqué pour enregistrer le second bit de données binaires est sensiblement de 5,0 µA.

76. Procédé de la revendication 70, comprenant en outre l'étape consistant à détecter une tension piézo-électrique induite dans la cellule de stockage, la tension piézo-électrique indiquant qu'une donnée binaire a été enregistrée dans la cellule.

77. Procédé de la revendication 70, dans lequel l'étape consistant à appliquer deux courants électriques pour enregistrer le premier bit de données comprend l'enregistrement d'une première valeur binaire en appliquant deux courants électriques tous deux ayant une première polarité et la même amplitude sur les première et seconde lignes d'adresse, respectivement, et en enregistrant une seconde valeur binaire en appliquant deux courants électriques ayant une seconde polarité qui est opposée à la première polarité et la même amplitude sur les première et seconde lignes d'adresse, respectivement.

78. Procédé de la revendication 77, dans lequel les deux courants électriques pour enregistrer le premier bit de données sont appliqués sous la forme de deux impulsions de courant électrique synchronisées.

79. Procédé de la revendication 70, dans lequel l'étape consistant à appliquer deux courants électriques pour enregistrer le second bit de données comprend l'enregistrement d'une première valeur binaire en appliquant deux courants électriques tous deux ayant une première et seconde polarités et la même amplitude sur les première et seconde lignes d'adresse, respectivement, et en enregistrant une seconde valeur binaire en appliquant deux courants électriques ayant les seconde et première polarités et les mêmes amplitudes sur les première et seconde lignes d'adresse, respectivement.

80. Procédé de la revendication 79, dans lequel les deux courants électriques pour enregistrer le second bit de données sont appliqués comme deux impulsions de courant synchronisés.

81. Procédé consistant à récupérer de manière non destructive les premier et second bits indépendants de données binaires enregistrés dans une seule cellule de stockage d'une mémoire non volatile à accès aléatoire, comprenant un substrat non magnétisable et une composition de matériaux ayant des propriétés ferromagnétiques et piézo-électriques et comprenant les éléments de Pb, Cd, Fe, Zn, Te, S et O, chacune de ces cellules étant adressable par une première et une seconde ligne d'adresse, comprenant les étapes consistant à :
appliquer deux courants électriques ayant la même polarité sur les première et seconde lignes d'adresse, respectivement, pour récupérer le premier bit de données, dans lequel les amplitudes des courants sont sensiblement identiques et les amplitudes combinées des courants sont insuffisantes pour modifier la valeur binaire des données enregistrées ; et
appliquer deux courants électriques ayant des polarités opposées sur les première et seconde lignes d'adresse, respectivement, pour récupérer le second bit de données, dans lequel les amplitudes des courants sont sensiblement les mêmes et les amplitudes combinées des courants sont insuffisantes pour changer la valeur binaire de la donnée enregistrée.

82. Procédé de la revendication 81, comprenant en outre l'étape consistant à capter une tension piézo-électrique générée dans la cellule de stockage en réponse aux courants appliqués.

83. Procédé de la revendication 82, dans lequel les première et seconde lignes d'adresse ont approximativement 1 µm de largeur et 1 µm d'épaisseur et sont espacées d'approximativement 4,75 µm, et dans lequel les amplitudes des deux courants appliqués pour récupérer les premier ou second bits de données sont sensiblement de 3,33 µA.

84. Procédé de la revendication 81, dans lequel les deux courants électriques sont appliqués pour récupérer le premier bit de données sous la forme de deux impulsions de courant électrique synchronisées ayant les mêmes amplitudes et polarités.

85. Procédé de la revendication 84, dans lequel les deux courants électriques sont appliqués pour récupérer le second bit de données sous la forme de deux impulsions de courant électrique synchronisées ayant les mêmes amplitudes et des polarités opposées.

86. Procédé consistant à récupérer de manière destructive les premier et second bits indépendants de données binaires enregistrés dans une seule cellule de stockage d'une mémoire non volatile à accès aléatoire, comprenant un substrat non magnétisable et une composition de matériaux ayant des propriétés ferromagnétiques et piézo-électriques et comprenant les éléments de Pb, Cd, Fe, Cr, Zn, Te, S et O, chacune de ces cellules étant adressable par une première et une seconde ligne d'adresse, comprenant les étapes consistant à :
appliquer deux courants électriques ayant une première polarité sur les première et seconde lignes d'adresse, respectivement, pour récupérer le premier bit de données, dans lequel les amplitudes des courants sont sensiblement identiques et les amplitudes combinées des courants sont suffisantes pour modifier une valeur binaire enregistrée dans le premier bit de données binaires en une première valeur binaire, et capter une première tension piézo-électrique ; et
appliquer deux courants électriques, l'un ayant une première polarité sur la première ligne d'adresse, et l'autre ayant une seconde polarité qui est opposée à la première polarité sur la seconde ligne d'adresse, respectivement, pour récupérer le second bit de données, dans lequel les amplitudes des courants sont sensiblement identiques et les amplitudes combinées des courants sont suffisantes pour modifier une valeur binaire enregistrée dans le second bit de données binaires en une première valeur binaire, et capter une seconde tension piézo-électrique.

87. Procédé de la revendication 86, dans lequel la première tension piézo-électrique a une valeur différente de zéro, indiquant que le premier bit de données a une seconde valeur binaire ; et
dans lequel la seconde tension piézo-électrique a une valeur différente de zéro, indiquant que le second bit de données a une seconde valeur binaire.

88. Procédé de la revendication 87, dans lequel les amplitudes des deux courants électriques appliqués pour récupérer le premier ou le second bit de données sont sensiblement de 5,0 µA.

89. Procédé de la revendication 86, dans lequel les deux courants électriques sont appliqués pour récupérer le premier bits de données comme deux impulsions de courant électriques synchronisées ayant les mêmes amplitudes et polarités.

90. Procédé de la revendication 89, dans lequel les deux courants électriques sont appliqués pour récupérer le second bit de données comme deux impulsions de courant électriques synchronisées ayant les mêmes amplitudes et des polarités opposées.
